# EUROPÄISCHE PATENTSCHRIFT

(11) **EP 2 572 777 B1**
(45) Veröffentlichungstag und Bekanntmachung des Hinweises auf die Patenterteilung: **15.03.2017**
(21) Anmeldenummer: 12008197.1
(22) Anmeldetag: 03.09.2009
(51) Int. Cl.: B01F 3/08, B01F 5/10, B01F 7/00, B01F 7/16, B01F 13/10, B01F 15/02, B01F 7/02

(54) **AUSLASSEINRICHTUNG EINER ROTOR-STATOR-DISPERGIERMASCHINE**
OUTLET MEANS OF A ROTOR-STATOR-DISPERSION MACHINE
MOYEN DE SORTIE POUR DISPERSEUR À ROTOR-STATOR

(30) Priorität: 05.09.2008 DE 102008045820
(43) Veröffentlichungstag der Anmeldung: 27.03.2013
(62) Teilanmeldung aus: 09778298.1
(73) Patentinhaber: Wittek, Axel, 25591 Ottenbüttel (DE)
(72) Erfinder: Wittek, Axel, 25591 Ottenbüttel (DE)
(74) Vertreter: Tesch, Sabine

(56) Entgegenhaltungen:
- EP-A1- 1 121 974
- EP-A2- 1 475 143
- WO-A2-2009/135624
- DE-U1- 20 002 959
- DE-U1- 29 608 712
- US-A1- 2007 008 815

## Beschreibung

Die Erfindung betrifft eine Auslasseinrichtung für den Anschluss einer Rotor-Stator-Dispergiermaschine an eine Abführvorrichtung, insbesondere eine Rohrleitung.

In der Verfahrenstechnik geht man für die Herstellung von Produkten allgemein von einem Rezepturmäßigen Mengenverhältnis aus. Einige Rohstoffe werden im Grammbereich zugegeben andere in großen Mengen. Des Weiteren erfordern einige Rohstoffe beim einbringen ins Produkt hohe Scherraten, andere niedrige Scherraten. Beim Herstellen von Dispersionen insbesondere beim Herstellen von Emulsionen ist es für den Erhalt eines Endprodukts mit den gewünschten Eigenschaften hinsichtlich der Größenverteilung der dispersen Phase, des Fließverhaltens und der Stabilität des Produkts gegenüber thermischer und mechanischer Belastung sowie zeitlichen Veränderungen gegenüber wichtig, dass die notwendigen Schritte des Einbringens der inneren Phase in die äußere Phase sowohl beim Dispergieren als auch beim Stabilisieren des erhaltenen Produktes prozesstechnisch definiert und zuverlässig durchgeführt werden.

Industriell werden Dispersionen, insbesondere Emulsionen, durch verschiedene Prozesse hergestellt. In US 2007/0008815 A1 werden ein Mischer und ein Mischverfahren zum Herstellen von Gipsplatten beschrieben, welche den Schaumbedarf beim Zuführen des Schlickers reduzieren helfen. Der Schlicker wird im Mischer hergestellt und in eine Region zwischen oberen und unteren Papierbahnen gegossen. Der Mischer weist ein Gehäuse, eine rotierende Scheibe, einen Schlickerauslass, eine Schlickerzufuhrvorrichtung auf die Gipsplatte und einen hohle Verbindungsabschnitt auf.

In der europäischen Patentanmeldung EP 1 121 974 A1 wird ein zweistufiges Mischverfahren beschrieben, in dem man von einem aus einem Behälter kommenden Hauptstrom eines Reagenz I einen Teilstrom abzweigt und diesem einen zweiten Teilstrom einer Mischung mit einem Reagenz II zuführt, die in einer Vormischkammer eines Rotor-Stator-Systems erzeigt wird, worauf man das Gemisch der beiden Teilströme durch einen rotierend angetriebenen Dispergierer in den restlichen Hauptstrom fördert.

Welcher Prozess ausgewählt wird hängt von der Art der Dispersion ab sowie von der Feinheit der dispersen Phase, mit welcher eine über den geforderten Zeitraum hinweg stabile Dispersion erhalten werden kann. Unter einer stabilen Dispersion wird ein Stoffsystem verstanden, dessen Partikelgrößenverteilung der dispersen Phase und/oder dessen Fließverhalten insbesondere dessen Viskosität sich über einen vorgegebenen Zeitraum im Wesentlichen nicht ändert. Die Erfindung bezieht sich auf die Herstellung von Dispersionen durch Vorlegen eines Pre-Mixes in einem Behälter mit Rührwerk, wobei der Pre-Mix zumindest einem Durchlauf durch eine Rotor-Stator-Dispergiermaschine ausgesetzt wird.

Besonders bei Emulsionen und Suspensionen mit einem hohen Dispersphasenanteil kommt es häufig zu teilweisen Überkonzentrationen, das heißt lokalen und/oder zeitlichen Abweichungen in der Dichte an Partikeln im umgebenden Fluid. Solche Überkonzentrationen können herkömmlicherweise nur durch lange Misch- und Dispergierzeiten zur gewünschten Homogenität gebracht werden. Die Gefahr für Überkonzentrationen tritt verstärkt auf bei geringen Füllständen in den Behältern, da die gängigen Maschinen die Flüssigkeit im Behälter in eine Rotationsbewegung versetzen. Dadurch wird der tatsächlich in das Fluid dissipierte Anteil der eingebrachten Energie vermindert. Besonders stark ist dieser Effekt unter Vakuumbedingungen, wenn die Ansaugung des Fluids aus dem Behälter abreißt.

Daher ist es erforderlich, eine bestimmte minimale Füllhöhe des Behälters einzuhalten, um den Pre-Mix mit den gewünschten definierten Eigenschaften der Rotor-Stator-Dispergiermaschine zuführen zu können und insbesondere den Einzug von Luft in das Rotor-Stator-System zu verhindern. Dieses minimale Ansatzvolumen liegt derzeit bei marktgängigen Rotor-Stator-Dispergiermaschinen bei etwa 35% des maximalen Füllstandes des Behälters bei voller Dispergierleistung. Nur dann sind zwischen einem Teilansatz und einem Vollansatz keine Tröpfchenverteilungs-Unterschiede mehr feststellbar.

Übliche Rotor-Stator-Dispergiermaschinen haben daher den Nachteil, einen relativ hohen Mindestfüllstand aufzuweisen. Daher sind die Möglichkeiten zur Variation der mit einer maschine zu verarbeitenden Ansatzmengen, die sogenannte Ansatzgrößenbreite, sehr beschränkt. Zudem muß der Mindestfüllstand auch bei der Reinigung der Maschinen eingehalten werden, so dass große Mengen Reinigungsmittel benötigt werden. Da somit immer eine relativ große Menge an Fluid in den betreffenden Anlage bewegt wird, wird die insgesamt in das Fluid eingebrachte Leistung in einem großen Volumen dissipiert, so dass die erreichte Energiedichte im Produkt verhältnismäßig gering ist. Dies kann zu ineffizienten Bedingungen für das Dispergieren führen. Zudem besteht die Gefahr, dass die Partikel beziehungsweise die Tropfen einer Emulsion koaleszieren.

Es ist daher eine Aufgabe der Erfindung, eine größere Flexibilität bei der Ansatzgrößenbreite, das heißt eine größere Bandbreite von minimal zu maximal zufriedenstellend verarbeitbarer Ansatzgröße, zu ermöglichen. Zudem soll ein verbesserter Energieeintrag in das Produkt erreicht werden, indem die Ausnutzung der eingebrachten Leistung verbessert und so für Emulsionen ein effizienter Tropfenaufbruch ermöglicht wird. Des Weiteren ist es ein Ziel der Erfindung, Koaleszenz von Tropfen beziehungsweise Aggregation von Partikeln beim Verlassen des Rotor-Stator-Dispergiermaschine möglichst weitgehend zu unterbinden. Außerdem soll durch die Erfindung eine Möglichkeit für schnellere Batch-Zeiten, das heißt weniger Durchläufe und damit schnelleres Erreichen des Ziels bei der Dispergieraufgabe, erreicht werden.

Diese Aufgaben werden auf überraschend einfache Weise gelöst, indem die Erfindung ein Übergangselement gemäß Anspruch 1 in Form einer Auslasseinrichtung für den Anschluss an eine Rotor-Stator-Dispergiermaschine schafft. Vorteilhafte Weiterbildungen sind Gegenstand der Unteransprüche.

Nach der Behandlung des Fluids in der Dispergiermaschine sind häufig zumindest teilweise zerkleinerte Tropfen oder Partikel enthalten, die noch nicht ausreichend stabilisiert sind und daher dazu neigen, wieder zu koaleszieren beziehungsweise zu aggregieren. Um dies zu vermeiden ist es vorteilhaft, auch nach dem Verlassen der Rotor-Stator-Dispergiermaschine turbulente Strömungsverhältnisse beibehalten zu können, damit die Partikel nicht in laminarer Strömung lange relativ nahe beieinander sein können, sondern lediglich relativ kurzen Kollisionen ausgesetzt sind. Koaleszenz beziehungsweise Aggregation werden darüber hinaus gefördert in Bereichen, in welchen das strömende Fluid einem Staudruck unterworfen ist.

Herkömmliche Dispergiermaschinen verwenden häufig ein Rohr als Auslasskanal aus der Rotor-Stator-Dispergiermaschine. Vergleicht man die Austrittsflächen des äußeren StatorZahnkranzes mit der Rohrquerschnittsfläche, so stellt man fest, das die Rohrquerschnittsfläche erheblich kleiner ist. Der gesamte radiale Ausstoß an Fluid durch den äußeren Statorzahnkranz muß durch diese kleine Öffnung, dies bedeutet, dass das Fluid zum Teil lange Wege zurückzulegen hat und Bereichen mit unterschiedlichen Strömungsgeschwindigkeiten sowie Zonen mit geringer Bewegung und hohem Staudruck ausgesetzt ist. Ein solcher Auslasskanal in Gestalt eines relativ dünnen Rohres kann wie eine plötzliche Verengung angesehen werden.

Basierend auf den Grundlagen zur Definition turbulenter und laminarer Strömungen von Reynolds, wonach der Gesamtwiderstand in einem strömenden Fluid die Summe aus Reibungswiderstand und Druckverlustwiderstand ist, hat der Erfinder folgende Maßnahmen zur Minimierung des Gesamtwiderstandes entwickelt.
- Der Reibungswiderstand ist dadurch zu minimieren, dass man nach Möglichkeit für eine laminare Grenzschicht sorgt. Dazu sind sanfte Übergänge in der geometrischen Gestaltung der strömungsführenden Bauteile vorgesehen.
- Der Druckverlustwiderstand im Falle der Umströmung eines Körpers ist dadurch zu verringern, dass man die Ablösestelle möglichst weit ans Körperheck verschiebt. Beide Einflüsse überlagern sich.

Der Übergang von laminaren zu turbulenten Strömungsverhältnissen lässt sich durch Angabe der Reynoldszahl Re für verschiedene Arten von Strömungen charakterisieren. Nach der Modellvorstellung von Reynolds wird eine laminare Strömung bei höheren Re-Zahlen instabil gegenüber Störungen wie zum Beispiel Schwinkungen, Vibrationen, die in Natur und Technik immer vorhanden sind. Derartige kleinen Störungen können den Umschlag von laminarer in turbulenter Strömung beeinflussen und verursachen. Für die Durchströmung eines Rohres mit kreisförmigem Querschnitt erfolgt dieser Umschlag etwa bei Re = 2300. Je heftiger diese Störungen sind, bei desto kleineren Werten der Reynolds-Zahl findet der Umschlag von laminarer in turbulente Strömung statt.

Gemäß der Erfindung werden daher der Auslasskanal oder die Auslasskanäle so ausgeführt, dass ein großer, sanfter, kontinuierlicher Übergang vom äußeren Zahnkranz im Rotor-Stator-System hin zur das Fluid abführenden Leitung, beispielsweise der Rezirkulationsleitung geschaffen wird, um Staudrücke zu minimieren. Dies wird durch einen großflächigen Auslasskanal erreicht. An den großflächigen Ober- und Unter-Seiten des Auslasskanals, das heißt den flachen Seiten, kommt es durch die hohen Fließgeschwindigkeiten zu Schwingungen beziehungsweise Vibrationen, welche die turbulente Strömung unterstützen.

Die Erfindung stellt damit eine Auslasseinrichtung für den Anschluss an eine Rotor-Stator-Dispergiermaschine, welche ein Rotor-Stator-System mit zumindest einem Zahnkranz umfaßt, und an eine Abführvorrichtung, insbesondere eine Rohrleitung, zum Abführen von Fluid aus der Rotor-Stator-Dispergiermaschine, zur Verfügung, wobei die Auslasseinrichtung mindestens zwei Auslasskanäle mit je einer ersten Öffnung zum Anschluss an das Außengehäuse der Rotor-Stator-Dispergiermaschine in einem das Rotor-Stator-System umfangenden Bereich, und mit je einer zweiten Öffnung zum Anschluss an die eine Abführvorrichtung aufweist. Die erste Öffnung weist einen rechteckigen Querschnitt auf. Die zweite Öffnung weist eine kleinere Querschnittsfläche als die erste Öffnung auf, so dass über die Länge der Auslasseinrichtung zwischen der ersten und der zweiten Öffnung im wesentlichen ein Konus ausgebildet wird.

In einer vorteilhaften Weiterbildung entspricht die Länge Lₐᵤₛ des Auslasskanals mindestens der größten Breite der rechteckigen ersten Öffnung. Auf diese Weise wird ein besonders langer, flacher Auslasskanal mit allmählichem Übergang in die Abführeinerichtung gebildet. Um die Auslasseinrichtung einfach an ein Rohr anschließen zu können sieht die Erfindung des Weiteren vor, dass die zweite Öffnung kreisförmig ist.

In einer vorteilhaften Weiterbildung ist das Anschlussmaß der ersten Öffnung an die Durchtrittsfläche des Fluids beim Verlassen des Rotor-Stator-Systems angepaßt, um die Strömung im wesentlichen ohne die Passage einer Erweiterung oder Verengung aus dem Rotor-Stator-System in die Auslasseinrichtung übernehmen zu können. Dazu ist die Auslasseinrichtung derart ausgebildet, dass die Summe der Querschnittsflächen der ersten Öffnung aller Auslasskanäle im wesentlichen der gesamten freien Fläche zwischen den Zähnen des Zahnkranzes entspricht, welcher der ersten Öffnung benachbart ist, wenn die Auslasseinrichtung an die Rotor-Stator-Dispergiermaschine angeschlossen ist.

Bei der Verwendung von einem Auslasskanal kann es auch bei einer gemäß der Erfindung gegenüber dem Stand der Technik deutlich verbesserten Strömungsführung bisweilen schwierig sein, einen turbulenten Durchfluss durch die gesamte Anlage mit der Rotor-Stator-Dispergiermaschine zu gewährleisten. Eine weitere erhebliche Verbesserung ist daher die erfindungsgemäße Auslasseinrichtung mit mehreren Auslasskanälen. Bereits bei einem sogenannten "dualen Auslasskanal", das heißt einer Auslasseinrichtung mit zwei Auslasskanälen, kann die turbulente Strömung im Betrieb zuverlässiger aufrecht erhalten werden. Als besonders günstig hat sich ein sogenannter "Quadro-Auslasskanal", das heißt eine Auslasseinrichtung mit vier Auslasskanälen, erwiesen. Gerade auch die unten näher beschriebene Kontur der vier Auslasskanäle trägt dazu bei, dass es zu verhältnismäßig niedrigen Staudrücken an den Wandungen und Übergängen kommt. Eine Reynolds-Zahl Zahl von Re = 10.000 kann aufrechterhalten werden.

In einer vorteilhaften Weiterbildung der Auslasseinrichtung verläuft der Übergang von der Seitenfläche eines Auslasskanals in die Seitenfläche eines benachbarten Auslasskanals bogenförmig. Zu dem gewünschten sanften Übergang der strömungsführenden Bauteile ineinander trägt des Weiteren bei, wenn gemäß einer weiteren Ausführungsform der Erfindung die erste Öffnung eines jeden Auslasskanals derart dimensioniert ist, dass jeder Auslasskanal im wesentlichen direkt in den benachbarten Außenkanal übergeht.

Um die Auslasseinrichtung flexibel für die Verarbeitung unterschiedlicher Stoffsysteme nutzen zu können und insbesondere eine sogenannte "late product differentiation" (LPD) zu ermöglichen, umfaßt in einer vorteilhaften Weiterbildung der Erfindung zumindest ein Auslasskanal eine Zuführeinrichtung zum Zuführen von Zutaten in fester, pulverförmiger und/oder flüssiger Form zu dem Fluid, welches im Betrieb durch den Auslasskanal aus der Rotor-Stator-Dispergiermaschine fließt.

Im Rahmen der Erfindung wird anhand der einzelnen Maßnahmen die Herstellung stabiler, feindisperser Dispersionen vereinfacht, indem die Strömungsführung durch eine gesamte Anlage mit Vorlagebehälter, Rotor-Stator-Dispergiermaschine und Zirkulationsleitung beziehungsweise Abführeinrichtung zum Aufrechterhalten turbulenter Strömungsverhältnisse optimiert wird.

In einer Anlage zum Herstellen von Dispersionen, welche zumindest ein Fluid enthalten, umfassend einen Behälter, eine Rotor-Stator-Dispergiermaschine und eine Abführvorrichtung sowie ein Zwischenstück für den Anschluss der Rotor-Stator-Dispergiermaschine an den Behälter und/oder eine Auslasseinrichtung für den Anschluss der Rotor-Stator-Dispergiermaschine an die Abführvorrichtung und/oder einen Einlaufstutzen zum Zuführen des Fluids in den Behälter können einer oder mehrere Aspekte der Erfindung genutzt werden.

Die Erfindung wird nachfolgend unter Bezugnahme auf die beigefügten Zeichnungen anhand von Ausführungsbeispielen näher erläutert. Dieselben Bauteile sind dabei mit denselben Bezugszeichen versehen. Es zeigen:
- Figur 1: schematische Darstellungen 1A, 1B, 1C, 1D und 1E von Anlagen gemäß dem Stand der Technik,
- Figur 2: eine schematische Darstellung eines an einen Behälter und eine Rotor-Stator-Dispergiermaschine angeschlossenen ersten Zwischenstücks im Querschnitt,
- Figur 3: eine schematische Darstellung eines Teils eines weiteren Zwischenstücks im Querschnitt,
- Figur 4: ein Fördermittel in Vorderansicht, Aufsicht und Teilschnitt,
- Figur 5: eine schematische Darstellung eines an einen Behälter und eine Rotor-Stator-Dispergiermaschine angeschlossenen weiteren Zwischenstücks im Querschnitt,
- Figur 6: eine Fotografie einer Innenansicht eines Strombrecher aufweisenden Teils eines weiteren Zwischenstücks,
- Figur 7: eine schematische Darstellung eines Stators für eine Rotor-Stator-Dispergiermaschine, insbesondere zur Verwendung in Kombination mit einer Auslasseinrichtung gemäß der Erfindung, im Querschnitt und teilweise geschnittener Aufsicht,
- Figur 8: eine Skizze des Rotor-Stator-Systems im Querschnitt zur Illustration einer Modellvorstellung der Durchströmung,
- Figur 9: eine schematische Darstellung einer Auslasseinrichtung, welche an eine Rotor-Stator-Dispergiermaschine angeschlossen ist, in Aufsicht mit Illustration einer Modellvorstellung der Durchströmung,
- Figur 10: eine schematische Darstellung einer Auslasseinrichtung gemäß der Erfindung in Vorderansicht, Rückansicht und Seitenansicht, Aufsicht sowie in perspektivischer Darstellung von vorne und von hinten,
- Figur 11: eine schematische Darstellung einer Auslasseinrichtung mit zwei Auslasskanälen gemäß einer Ausführungsform der Erfindung in Aufsicht,
- Figur 12: eine schematische Darstellung einer Auslasseinrichtung mit vier Auslasskanälen gemäß einer weiteren Ausführungsform der Erfindung in Aufsicht und Seitenansicht,
- Figur 13: eine schematische Darstellung eines Einlaufstutzens in Aufsicht und im Schnitt (Figur 13A), eine schematische Darstellung des Anschlusses eines weiteren Einlaufstutzens in Seitenansicht (Figur 13B), eine schematische Darstellung eines weiteren Einlaufstutzens in Aufsicht (Figur 13C),
- Figur 14: eine schematische Darstellung einer Anlage in Seitenansicht,
- Figur 15: eine schematische Darstellung einer Zuführeinrichtung im Längsschnitt sowie in Seitenansicht,
- Figur 16: ein Diagramm, in welchem der Volumenstrom des das Rotor-Stator-Systems in Abhängigkeit von dessen Drehzahl aufgetragen ist,

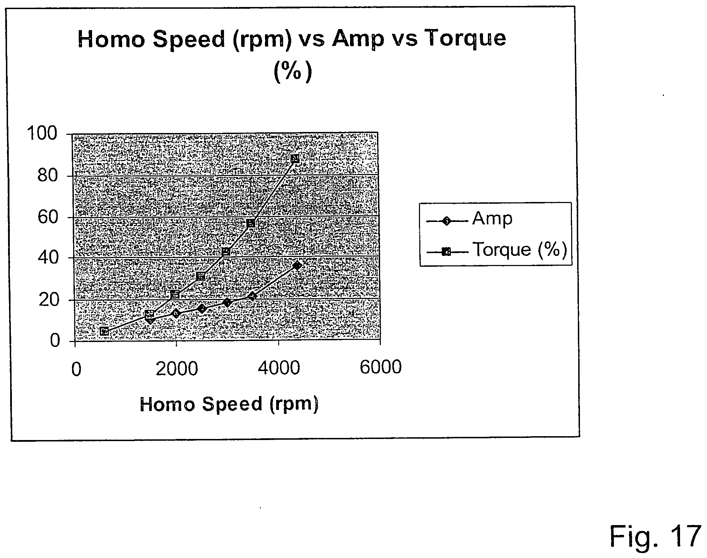

- Figur 17: ein Diagram, in welchem das Drehmoment des Rotor-Stator-Systems in Abhängigkeit von dessen Drehzahl aufgetragen ist,
- Figur 18: eine schematische Darstellung einer auf eine Late Product Differentiation ausgelegten Anlage, genannt "LPD-Unit", gemäß einer ersten Ausführungsform der Erfindung im Längsschnitt,
- Figur 19: eine schematische Darstellung einer auf eine Late Product Differentiation ausgelegten Anlage, genannt "LPD-Unit", gemäß einer zweiten Ausführungsform der Erfindung im Längsschnitt.

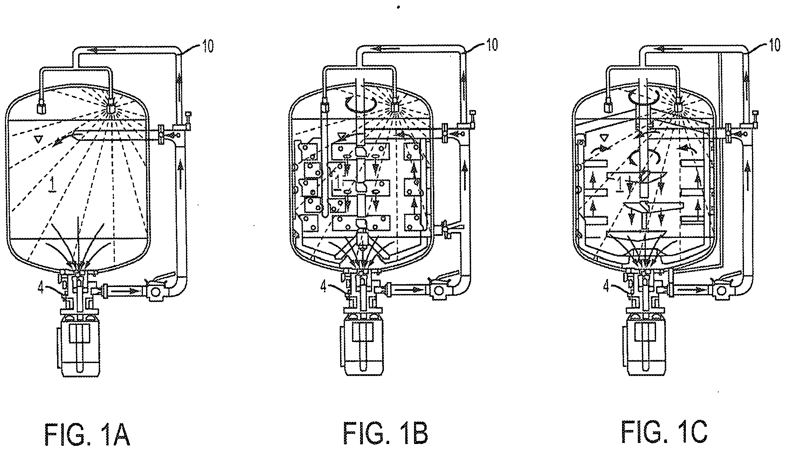

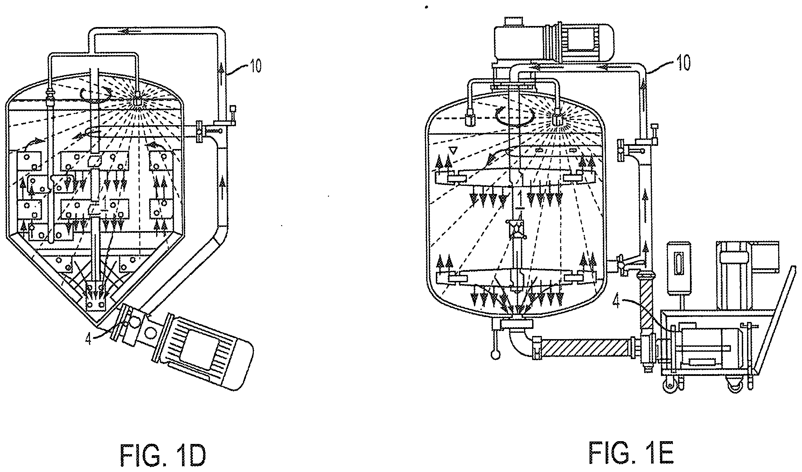

Zum Herstellen von Dispersionen, welche mindestens ein Fluid enthalten, werden häufig Anlagen eingesetzt, von denen in Figur 1 einige typische Beispiele gezeigt sind. Die Anlagen umfassen einen Behälter 1, in welchem zumindest das Fluid vorgelegt wird, eine Dispergiermaschine 4 und eine Zirkulationsleitung 10, mit welcher das in der Dispergiermaschine 4 behandelte Fluid in den Behälter 1 zurückgeführt wird. Diese Grundform einer Anlage ist in Figur 1A dargestellt.

Zur Verbesserung der Durchmischung des Fluids im Behälter 1 kann ein Schaberrührwerk eingesetzt werden (siehe Figur 1B). Des weiteren können zur Unterstützung der Durchmischung des Fluids im Behälter 1 gegenläufige Rührwerke, wie in Figur 1C gezeigt, verwendet werden. Die Dispergiermaschine 4 wird an dem Behälterboden des Behälters 1 angeschlossen und saugt das Produkt aus dem Behälter 1 an und pumpt es über die Zirkulationsleitung 10, welche außerhalb des Behälters 1 liegt, wieder in den Behälter hinein. Die Rückführung des Produkts in den Behälter kann zum einen oberhalb des Fluidspiegels, wie in den Abbildungen in Figur 1 jeweils oben gezeigt, erfolgen.

Zum anderen kann die Rückführung des Produkts in den Behälter 1 auch unterhalb des Fluidspiegels erfolgen, wie die in den Abbildungen von Figur 1 dargestellten, seitlich von der Zirkulationsleitung 10 in den Behälter 1 führenden Leitungen, zeigen. Die Dispergiermaschine 4, welche unter den Behälter 1 angebaut ist, ist zur Herstellung fließfähiger Stoffe, wie zum Beispiel Emulsionen oder Suspensionen ausgelegt. Diese werden im folgenden mit dem Begriffen "Dispersion" beziehungsweise "Fluid" umfaßt und teilweise auch als "Produkt" bezeichnet.

In den in den Figuren 1A bis 1C dargestellten Anlagen ist die Rotor-Stator-Dispergiermaschine koaxial zur Längsachse des Behälters 1 angeordnet. Die Figur 1D zeigt eine Lösung aus dem Stand der Technik, bei welcher die Rotor-Stator-Dispergiermaschine 4 in einem Winkel von mehr als 90° bis 120°, geneigt zur Längsachse des Behälters 1, angeordnet ist. Bei dieser Anordnung entstehen große Probleme durch Biegespannungen innerhalb der Dispergiermaschine. Die Rotationsbewegung des Fluids, welche dieses aus dem Behälter beim Übergang in die Rotor-Stator-Dispergiermaschine mitbringt, wird jedoch nur leicht eingedämmt. Figur 1E zeigt eine im Winkel von 90° zur Längsachse des Behälters 1 angeordnete Rotor-Stator-Dispergiermaschine. Bei dieser Lösung aus dem Stand der Technik entsteht jedoch der Nachteil einer verringerten Ansaugleistung für die Rotor-Stator-Dispergiermaschine 4 infolge der Umlenkung des Fluids.

Besonders Rotor-Stator-Dispergiermaschinen mit hoher Ansaugleistung neigen jedoch dazu, dass aus dem Behälter 1 angesaugte Fluid in eine Drehbewegung zu versetzen, wodurch die Dispergierleistung herabgesetzt wird. Das bedeutet beispielsweise eine verbreiterte Tropfengrößenverteilung bei einer Emulsion. Bei einem geringen Fluidniveau im Behälter 1 kommt es unter diesen Bedingungen zu einer Trombenbildung, wodurch auch noch Luft in unerwünschter Weise in das Produkt eingezogen werden kann. Um diese nachteilige Rotation des Fluids beim Übergang vom Behälter 1 in die Rotor-Stator-Dispergiermaschine 4 zu vermeiden, dient das Zwischenstück 2.

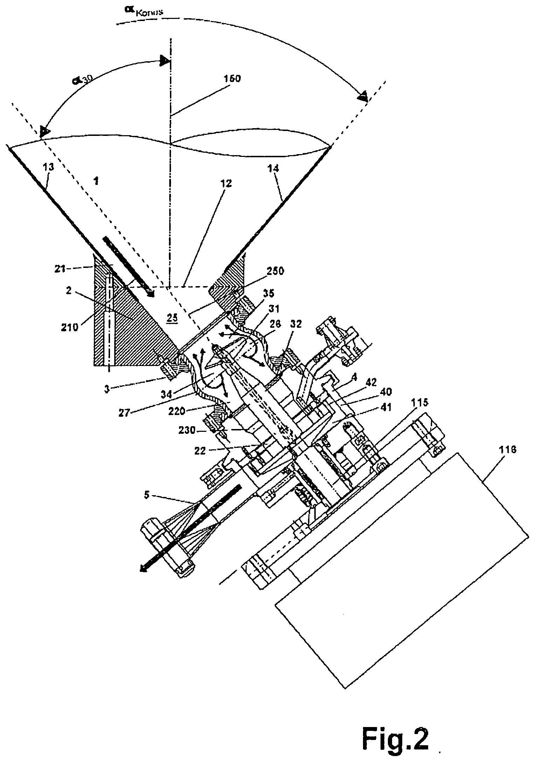

In Figur 2 ist eine Anordnung gezeigt, bei welcher ein Zwischenstück 2 am Übergang zwischen dem Behälter 1 und der Rotor-Stator-Dispergiermaschine 4 angeordnet ist. Die Rotor-Stator-Dispergiermaschine 4 umfaßt ein Gehäuse 40, in welchem ein Rotor 41 und ein Stator 42 koaxial zueinander angeordnet sind. Der Rotor 41 ist drehbar auf einer Welle 115 gelagert und kann von einem Motor 116 angetrieben werden. Der Behälter 1 geht an seinem Boden 14 in den Auslass 12 des Behälters über. Das Zwischenstück 2 ist in dem Bereich 13, der dem Auslass 12 benachbarten Behälterwand des Bodens 14 an den Behälter 1 angeschlossen, wie in Figur 2 durch die angedeutete Flanschverbindung gezeigt ist.

Das Zwischenstück 2 weist eine Öffnung 21 zum Anschluss an den Auslass 12 des Behälters 1 auf. Das Zwischenstück weist eine weitere Öffnung 22 auf, mit welchem das Zwischenstück 2 an die Rotor-Stator-Dispergiermaschine 4 angeschlossen werden kann. In Betrieb wird Fluid aus dem Behälter 1 durch den Auslass des Behälters 2 in die Öffnung 21 des Zwischenstücks 2 eingezogen. Es passiert das Zwischenstück 2 durch dessen Rohrleitung 25 und tritt durch die Öffnung 22 in die Dispergiermaschine 4 ein. Das Fluid durchläuft den Rotor 41 und den Stator 42 der Dispergiermaschine 4 und tritt durch eine Auslasseinrichtung 5 aus der Dispergiermaschine aus.

Die Rohrleitung 25 des Zwischenstücks 2 weist eine Längsachse 250 auf, welche um den Winkel α₃₀ gegenüber der Längsachse 150 des Behälters 1 geneigt ist. Der Winkel α₃₀ kann im Bereich von weniger als 90° gewählt werden. Zweckmäßigerweise liegt der Winkel α₃₀ im Bereich zwischen etwa 20° und etwa 60°. In einer besonders bevorzugten Ausgestaltung ist das Zwischenstück 2 zum Anschluss einer Dispergiermaschine 4 an einen Behälter 1 vorgesehen, der einen zum Auslass 12 des Behälters konisch im Winkel α_{Konus} zulaufenden Behälterboden 14 aufweist. Beträgt der Winkel α₃₀ die Hälfte des Winkels α_{Konus}, tritt Fluid aus dem Behälter 1 im Betrieb in die Rohrleitung 25 des Zwischenstücks 2 direkt über den Konusboden in die Dispergiermaschine unter den Winkel des Zwischenstücks zugeführt. Die Zufuhr des Produkts direkt über den Konusboden in die Dispergiermaschine infolge des Einbauwinkels α₃₀ des Zwischenstücks 2 führt zu einer besonders effizienten Unterdrückung der Rotationsbewegung des Fluids im Behälter vor dem Eintritt des Fluids in die Dispüergiermaschine 4.

Das in Figur 2 gezeigte Zwischenstück 2 zweiteilig ausgebildet und umfaßt einen ersten Teil 210 und einen zweiten Teil 220. Die Teile 210 und 220 können integrale Bestandteile eines Zwischenstücks 2 sein. Um eine größere Flexibilität zu erreichen, ist, wie in Figur 2 gezeigt, das Teil 220 jedoch als separate Komponente des Zwischenstücks 2 ausgebildet und kann nach Art einer Flanschverbindung an das Teil 210 angeschlossen werden. Das Zwischenstück 2 übernimmt mit der in Figur 2 dargestellten bevorzugten Ausführungsform eine Doppelfunktion. Zum einen erfolgt die Umlenkung des Fluids vor dem Eintritt in die Dispergiermaschine um den Winkel α₃₀ und zum anderen kann das Fluid mit Hilfe eines Rührers 31 vor dem Eintritt in die Dispergiermaschine 4 beschleunigt werden.

Der Rührer 31 umfaßt beispielsweise ein Propeller-Rührerblatt 3 und ist mit seinem Schaft 32 mit dem Rotor 41 verbunden. Der Rührer 31 kann dann im Betrieb durch den Motor 116 angetrieben werden. Mit Hilfe des Rührers tritt das aus dem Behälter 1 und die Rohrleitung 25 des Zwischenstücks der Dispergiermaschine 4 zugeführte Fluid in Richtung auf die Dispergiermaschine hin beschleunigt. Durch die Unterdrückung der Rotationsbewegung, welche das Fluid aus dem Behälter 1 mitbringen könnte, in der Rohrleitung 25 des Zwischenstücks 2, wird eine optimale Pumpwirkung der Dispergiermaschine unterstützt.

Diese Wirkung wird weiter verbessert, indem das Zwischenstück 2 eine Kammer 26 zur Aufnahme des Rührerblatts 3 definiert, wobei die Kammer 26 durch Auswölbung der Wand des Zwischenstücks von dessen Längsachse 250 her gesehen, nach außen begrenzt wird. Wird das zweite Teil 220 des Zwischenstücks 2 von einem flexiblen Element, wie einem Gummibalg 27 gebildet, ist durch den zweiteiligen Aufbau des Zwischenstücks 2 eine besonders einfache und gleichzeitig robuste Konstruktion des Zwischenstücks 2 möglich.

Der Gummibalg 27 weist eine vorgeformte bauchige Struktur auf (vergleiche Figur 2) und bildet so die Kammer 26, in welcher das Rührerblatt 3 des Rührers 31 angeordnet werden kann. Die Auswölbung im Bereich der Kammer ist dabei in etwa so bemessen, dass zwischen der äußeren Begrenzung des Rührerblattes 3 und der benachbarten Innenwand des Gummibalgs 27 ein Ringspalt ausgebildet wird, dessen Breite höchstens etwa ein Viertel des Durchmessers der Rohrleitung 25 außerhalb der Kammer 26, dass heißt in dem Bereich, in dem keine Auswölbung vorhanden ist, ist.

Durch diese Konstruktion wird mit Hilfe des Rührerblatts 3 im Betrieb durch den Rührer 31 der Rotor-Stator-Dispergiermaschine 4 aus dem Behälter 1 ein Volumenstrom V̇_{Propeller} (V_punkt_Propeller) zugeführt. Die Dispergiermaschine 4 selbst hat eine Förderleistung V̇_{RS} (V_punkt_RS). Der Propeller ist so ausgelegt, dass der Volumenstrom V̇_{Propeller} größer ist als die Förderleistung V̇_{RS}. Das heißt, ein Anteil des durch den Rührer der Dispergiermaschine zugeführten Fluids strömt in Betrieb nicht durch die Dispergiermaschine, sondern wird von der Druckseite 34 des Fördermittels 3 wieder auf die Saugseite 35 gebracht.

Für eine besonders effiziente Strömungsführung ist es vorteilhaft, die auftretenden Teilströme, möglichst gerichtet, insbesondere im Zwischenstück 2 zu führen. Um dafür den radialen Ausstoß von Fluid aus dem Rührerblatt 3 nach außen und damit die Rückvermischung dieses nach außen ausgestoßenen Produkts mit auf die Dispergiermaschine 4 am Rührerblatt 3 vorbei zu- und von der Dispergiermaschine 4 nicht aufgenommenen und daher zurückströmenden Produkt zu vermeiden, weist das Rührerblatt eine Hülse 33 auf. Dadurch wird Fluid, welches in dem von der Hülse umschlossenen Bereich von dem Rührerblatt auf die Druckseite und damit zur Dispergiermaschine hin geförderdes Fluid, gerichtet in einem definierten Teilstrom, der Dispergiermaschine zugeführt.

Gleichzeitig bildet die Hülse die Innenwand des oben beschriebenen Ringkanals in der Kammer 26 zwischen der Außenwand der Kammer und dem Rührerblatt 3. Der Ringkanal ist somit innen zur Längsachse 250 des Rohrs 25 hin von der Hülse begrenzt und bildet einen definierten Bereich für den von der Druckseite 34 auf die Saugseite 35 des Rührerblatts 3 zurückströmenden Fluids. Auf der Saugseite 35 kollidiert das rückgeführte Fluid mit dem angesaugten Fluid, so dass durch die Kollision der entsprechenden Produktströme ein weiterer Beitrag zum Verhindern einer Rotation des Fluids beim Austritt aus dem Behälter geleistet wird.

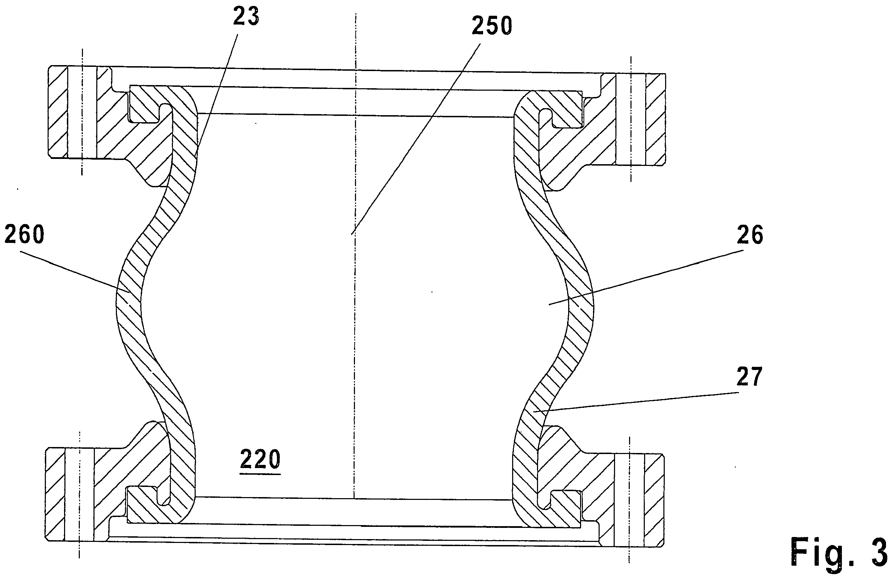

In Figur 3 ist der zweite Teil 220 des Zwischenstücks 2 dargestellt. Ein Gummibalg 27 stellt die Wand 23 der Rohrleitung des Zwischenstücks in dessen zweitem Teil 220 dar. An seinen beiden Enden weist der Gummibalg 27, eine von der Längsachse 250 des Teils 220 aus gesehen nach außen umgebogene Lippe auf. Die Lippe steht in Eingriff mit einem entsprechend geformten Anschlussring, mit welchem das Teil 220 nach Art einer Flanschverbindung mit dem ersten Teil 210 des Zwischenstücks beziehungsweise mit dem Gehäuse 40 der Dispergiermaschine verbunden werden kann. Der Gummibalg 27 ist in seinem mittleren Bereich 260 konvex geformt. Der Gummibalg 27 weist demnach eine Ausbuchtung auf, welche eine Kammer 26 definiert.

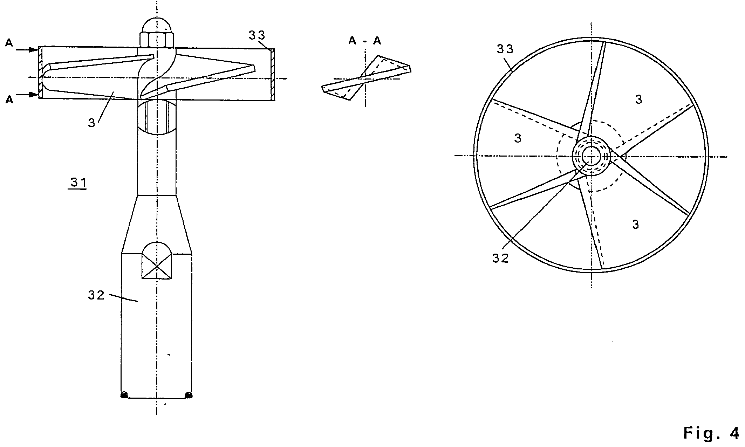

In der Kammer 26 kann ein Fördermittel 3, insbesondere ein Rührerblatt, angeordnet werden. In Figur 4 ist ein entsprechendes Fördermittel dargestellt. Der Rührer 31 umfaßt einen Schaft 32. Mit dem Schaft 32 kann der Rührer 31 mit dem Rotor 41, beziehungsweise der Antriebswelle 115 der Rotor-Stator-Dispergiermaschine 4 (in Figur 4 nicht dargestellt) verbunden werden. Der Rührer 31 weist ein Rührerblatt 3 auf, welches einen Propellerrührer definiert. Das Rührerblatt 3 ist an seinen äußeren Enden mit einer Hülse 33 verbunden. Die Hülse 33 bildet somit einen Mantel für das Rührerblatt 3 und wirkt in Betrieb als Führungshülse für Flüssigkeit, welche von der in der Figur 4 unterhalb des Rührerblatts 3 liegenden Druckseite des Rührerblatts außen an der Hülse 33 vorbei geführten Flüssigkeit auf die in Figur 4 oberhalb des Rührerblatts 3 liegenden Saugseite, sowie für von der Saugseite auf die Druckseite unter Passage des Rührerblatts 3 durch die Hülse 33 hindurch zu führenden Flüssigkeit.

Das speziell ausgebildete Fördermittel 3 mit einem Propellerrührer in einer Führungshülse, welches in einem flexiblen Element, wie einem Gummibalg, plaziert wird, wobei der Gummibalg konvex geformt wird, ermöglicht eine deutliche Verbesserung der Ansaugkonditionen für das verwendete Rotor-Stator-Dispergiersystem. Durch die Unterdrückung der Rotationsbewegung des Fluids im Zwischenstück 2 kann eine optimale Pumpwirkung erreicht werden. Durch die Ansaugung durch den Propeller-Rührer mit Ringhülse hindurch wird der radiale Ausstoß von Fluid aus dem Rührerblatt einerseits und andererseits ein verbesserter Rückfluss von Fluid von der Druck- auf die Saugseite des Rührers erreicht.

Mit Hilfe des Propeller-Rührers mit Ringhülse kann ein Volumenstrom V̇_{Propeller} angesaugt werden, welcher zwei- bis dreimal größer ist, als der Durchsatz V̇_{RS}. Damit wird eine Rückführung des überschüssig angesaugten Volumenstroms ΔV̇ auf die Saugseite des Propellers erreicht. Dieser zurückgeführte Volumenstrom wird unter einem Winkel in den von Rohrleitung 25 im Zwischenstück 2 gebildeten Ansaugkanal zurückgeführt, so dass eine Kollision des angesaugten mit dem Zurückgeführten Produkts entsteht. Durch diese Kollision wird die Rotationsbewegung, die durch die hohe Drehzahl des Propellers entsteht, stark gebremst. Ein Teil des zurückgeführten Volumenstroms wird dadurch wieder dem Propeller, bei leichtem Überdruck, zugeführt. Dies fördert des weiteren die Durchmischung des Produkts, bevor das Produkt das Rotor-Stator-System erreicht. Statt eines Propellerrührers kann auch jede andere Rührerblattgeometrie verwendet werden, die der Fachmann insbesondere für das jeweils zu verarbeitende Produkt als geeignet ansieht.

Die Rückführung des Volumenüberhangs ΔV̇ auf die Saugseite des Propellers wird möglich durch das Zusammenspiel des Rührerblatts mit einer Hülse, da der radiale Ausstoß aus dem Rührer unterbunden wird, der Geometrie des flexiblen Elements (vergleiche Figur 3) und dem Anschlusswinkel der Rotor-Stator-Dispergiermaschine α₃₀ über das Zwischenstück mit zumindest einem Bereich, der dem Auslass 12 benachbarten Behälterwand 13 parallelen Anschluss.

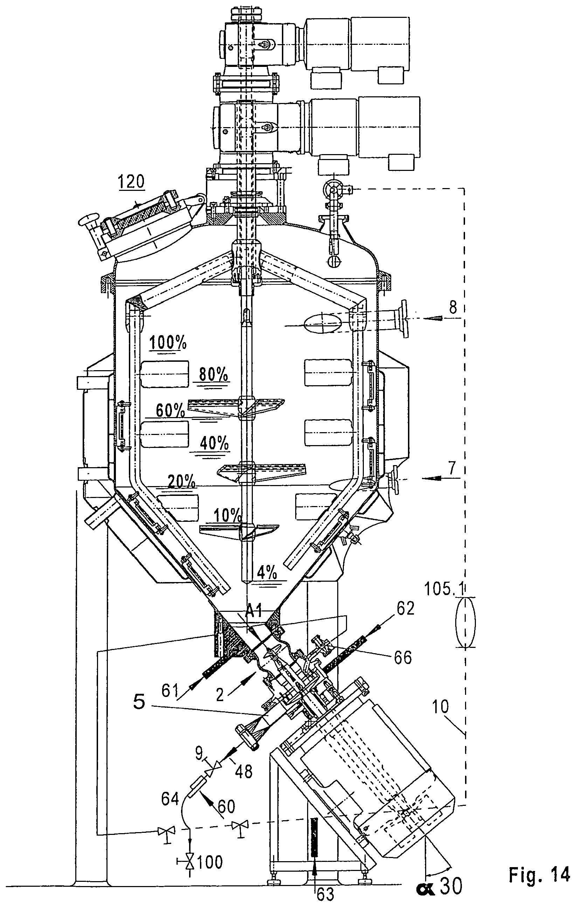

Im Betrieb, wenn die Rotor-Stator-Dispergiermachine an den Behälter angeschlossen ist, wird Fluid, welches sich im Bereich des konischen Behälterbodens befindet, zusätzlich durchmischt. Diese zusätzliche Durchmischung ist dann besonders stark ausgeprägt, wenn dem im Konus des Behälterbodens 14 befindlichen Fluid möglichst wenig bis gar kein Fluid nachgeführt wird. Wie unten anhand von Figur 14 erläutert werden wird, werden diese Bedingungen dadurch erreicht, dass die Rückführung von über die Auslasseinrichtung 5 (vergleiche Figur 2) aus der Dispergiermaschine 4 entnommenen Produkt in den Behälter 1 über die Rezirkulationsleitung 10 mit Hilfe eine Ventils 9 (siehe Figur 14) stark gedrosselt, beziehungsweise vollständig unterbunden wird.

Die obigen Ausführungen beschreiben unter anderem, wie die Rotation des Fluids im Bereich des Übergangs aus dem Behälter 1 unterdrückt werden kann. Wird ein Zwischenstück 2 mit einem Fördermittel 3 verwendet, besteht infolge der Drehbewegung des Rührers auch im Bereich des Übergangs von der Druckseite des Fördermittels 3 hin zur Dispergiermaschine 4 die Gefahr, dass das Fluid in eine Rotationsbewegung versetzt und somit die Ansaugleistung der Dispergiermaschine 4 vermindert wird. Um diese Gefahr zu vermeiden, wird zumindest ein Strombrecher im Zwischenstück 2, vor dem Dispergierraum der Rotor-Stator-Dispergiermaschine 4, angeordnet. Der Dispergierraum wird von dem Rotor 41 und dem Stator 42 der Dispergiermaschine 4 definiert.

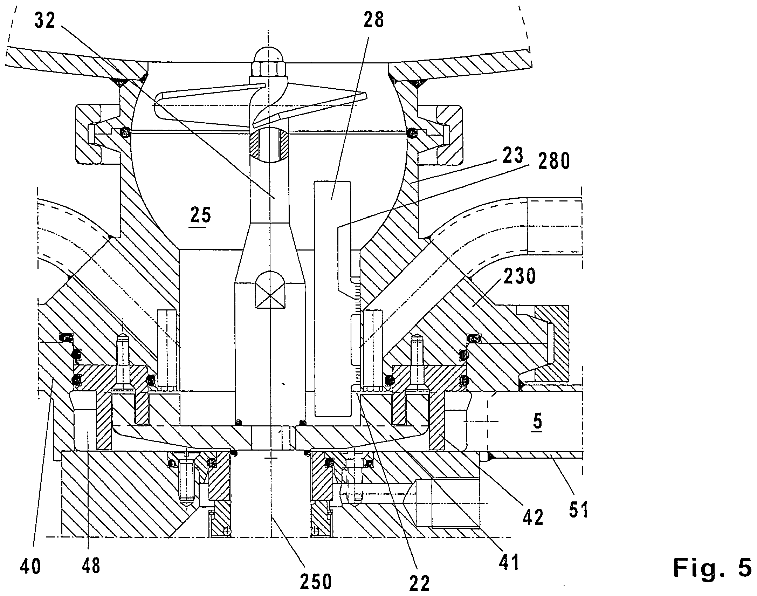

In Figur 5 ist die entsprechende Anordnung mit einem Strombrecher 28 dargestellt. Auf der Saugseite der Rotor-Stator-Dispergiermaschine wird im Betrieb Fluid durch die Rohrleitung 25 des Zwischenstücks dem Dispergierraum mit Hilfe des Rührers 31, von dem in Figur 4 der Schaft 32 gezeigt ist, zugeführt. Mindestens ein Strombrecher 28 ist in diesem Bereich angeordnet. Der Strombrecher 28 umfaßt ein, entlang der Längsachse 250 der Rohrleitung 25, angeordnetes längliches Element, wie beispielsweise ein Blech. Dieses Blech ist radial zur Längsachse 250 in der Rohrleitung 25 angeordnet und beispielsweise über eine Schraubverbindung 280 mit der Wand 23 der Rohrleitung 25 verbunden.

Neben der Wand 23 kommt auch jede andere feststehende, das heißt nicht rotierende, Komponente der Dispergiermaschine 4 als Halterung für den Strombrecher 28 in Frage. Beispielsweise kann der Strombrecher 28 auch mit seinem Außengewinde mit einem Innengewinde kämmen, welches an einem Flansch angebracht ist, der zur Befestigung des Zwischenstücks 2 am Gehäuse der Dispergiermaschine 4 vorgesehen ist. Dieser bildet in der in Figur 5 (vergleiche auch Figur 2) dargestellten Ausführungsform einen dritten Teil 230 des Zwischenstücks 2.

Der Teil 230 liegt unmittelbar vor der zweiten Öffnung 22 des Zwischenstücks, durch welche im Betrieb Fluid aus dem Zwischenstück 2 in die Dispergiermaschine 4 eintritt. Die Strombrecher 28, die vom Fachmann auch als Leitbleche bezeichnet werden, sind bis dicht an den Rotor 42 herangeführt, um eine Rotationsbewegung bei der Übernahme des Produkts aus der Rohrleitung 25 in den Dispergierraum des Rotor-Stator-Systems zu verhindern. Zwischen den Strombrechern 28 und der der Längsachse 250 zugewandten Innenseite des inneren Zahnkranzes des Rotors entsteht im Betrieb eine starke Verwirbelung im Fluid, wenn der innere Zahnkranz des Rotors die Strombrecher passiert. Dadurch wird die Durchmischung des Produkts weiter verbessert. Das Zwischenstück 2 und insbesondere das Teil 230 mit den Strombrechern 28 kann in Kombination mit verschiedensten Rotorzahngeometrien verwendet werden.

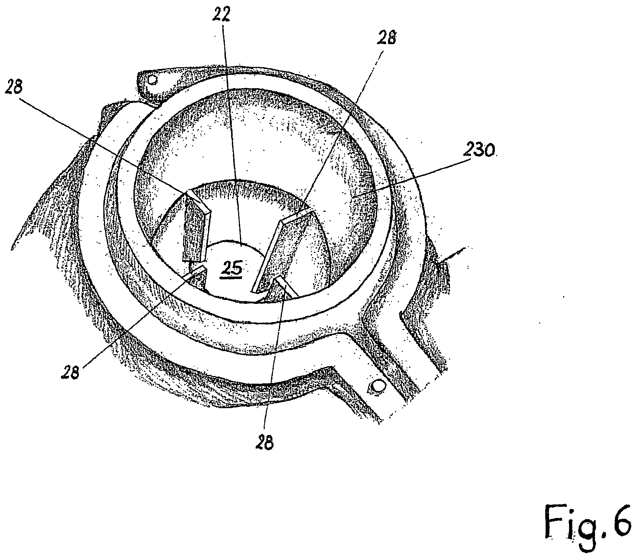

In der in Figur 5 gezeigten Darstellung sind drei Strombrecher 28 gleichmäßig um die Längsachse 250 herum verteilt angeordnet. In Figur 6 ist eine weiteres Zwischenstück 2 in dem Teil 230 gezeigt. In der Rohrleitung 25 sind vier Strombrecher 28 angeordnet. In Betrieb durchströmt das Fluid das Teil 230 in der in Figur 6 dargestellten Ausführungsform in Richtung in die Papierebene hinein. Bevor das Fluid durch die Öffnung 22 in die Dispergiermaschine 4 eintritt, passiert es die Strombrecher 28. Eine mögliche Drehbewegung des Fluids, welche durch die Rotation des Rührers 31 hervorgerufen werden kann (vergleiche Figur 2), wird dabei durch die Strombrecher 28 durchbrochen.

Durch die Umlenkung der Strömung des den Behälter 1 verlassenden Fluids mit Hilfe des Zwischenstücks 2 und dessen Neigung um den Winkel α₃₀ gegenüber der Längsachse des Behälters, sowie durch Verwendung des flexiblen Elements 27 mit der Ausbuchtung zur Bildung einer Kammer 26, in welcher ein Fördermittel 3 angeordnet werden kann und schließlich durch die Strombrecher 28, werden Mittel zur Verfügung gestellt, mit welchen eine Rotation des Fluids unmittelbar vor dem Eintritt in die Rotor-Stator-Dispergiermaschine 4 verhindert werden kann. Dies hat den weiteren Vorteil, dass elektrostatische Aufladungen im Produkt vermieden werden können, welche insbesondere einen unkontrollierbaren Einfluss auf die Wirkung der Emulgatoren haben können. Derartige elektrostatische Aufladungen des Produkts werden durch Reibung zwischen dem Produkt und dem Gehäuse der Dispergiermaschine verursacht. Durch eine Rotation des Produkts entsteht eine zusätzliche Reibung zwischen dem Produkt und dem Gehäuse.

Um im Dispergierraum Kavitation im Fluid beim Betrieb der Rotor-Stator-Dispergiermaschine und/oder Koaleszenz von Tropfen beziehungsweise Aggregation von Partikeln der durch die Dispergiermaschine geförderten Dispersion zu vermeiden, muß die Fließgeschwindigkeit des Fluids und damit der Druck im Dispergierraum vom Eintritt nach Passieren der Öffnung 22 des Zwischenstücks 2 bis zum Austritt, also von innen nach außen, durch den Dispergierraum zunehmen. Dazu ist es vorteilhaft, wenn mit einem Zwischenstück 2, wie es oben beschrieben wurde, ein Stator 42 für den Dispergierraum der Rotor-Stator-Dispergiermaschine 4 verwendet wird, bei welchem die durchströmte Fläche von innen nach außen kleiner wird.

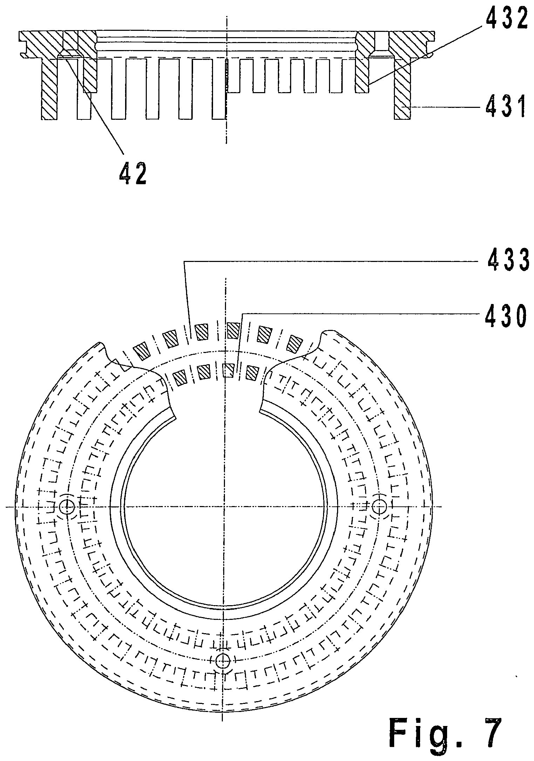

In Figur 7 ist als Beispiel für einen derartigen Stator ein Stator 42 mit zwei Zahnkränzen 431 und 432 gezeigt. Die Durchtrittsfläche 433 zwischen den Zähnen des äußeren Zahnkranzes 431 ist kleiner als die Durchtrittsfläche 430 zwischen den Zähnen 432 des inneren Zahnkranzes. Die äußere Durchtrittsfläche 433 kann um einen Faktor zwischen 10 und 30 Prozent kleiner sein als die Durchtrittsfläche 430 innen, wobei der genaue Wert abhängig von Geometrie und Anzahl der Zähne des äußeren Zahnkranzes des Stators ist. Die Verringerung der Durchflussfläche kann durch zwei Maßnahmen erreicht werden.

Zum einen können bei gleicher Zahl der Öffnungen die Öffnungen schmaler gestaltet werden. Jedoch sollte ein Verhältnis der Öffnungsbreite zur Öffnungstiefe von zirka 1 zu 1 beibehalten werden, um den Druckverlust beim Durchtritt des Fluids durch die Zähne des äußeren Zahnkranzes nicht zusätzlich zu erhöhen. Bei vergleichbaren Maschinen liegt diese Verhältnis bei etwa 1 zu 3 bis 1 zu 4. Die Tiefe wird dabei radial zur Längsachse des Stators gemessen. Zum anderen kann das Gehäuse 40 der Rotor-Stator-Dispergiermaschine in seinem dem Dispergierraum zugewandten Bereich entsprechend gestaltet werden.

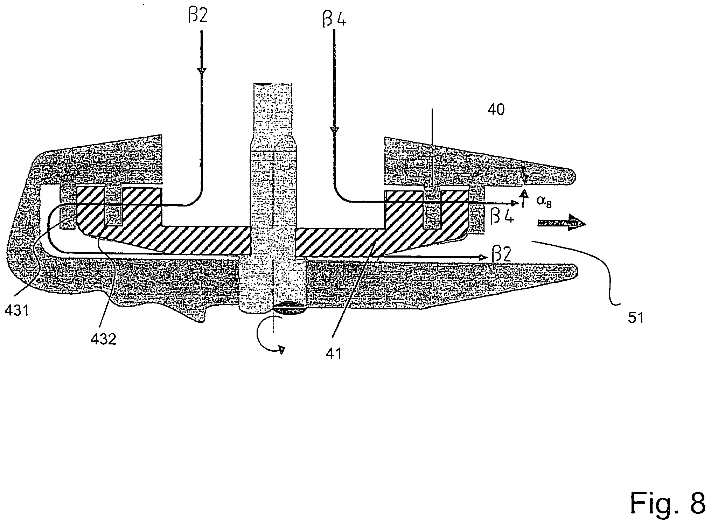

Hierzu ist in Figur 8 eine schematische Darstellung des Dispergierraums mit dem Rotor 41 und dem inneren und äußeren Zahnkranz 431, 432 des Stators dargestellt. Der obere Teil des dem Dispergierraum zugewandten Bereichs des Gehäuses 40 wird, von der Längsachse des Rotors her gesehen, von innen nach außen derart abgeschrägt, dass die Höhe der Durchtrittsöffnungen des äußeren Zahnkranzes des Stators verringert wird. In der in Figur 8 gezeigten Darstellung ist diese Schräge mit dem Winkel α₈ gekennzeichnet. Der Vorteil dieser Maßnahme ist, dass der Produktstrom beim Durchtritt durch den Dispergierraum nicht nur radial, sondern auch axial beschleunigt wird und dadurch die Durchmischung in dem dem Dispergierraum folgenden Auslasskanal verbessert wird. In diesem Aulaßkanal gelangt das Fluid durch die in Figur 8 eingezeichnete erste Öffnung 51 des Auslasskanals.

Nach der Erzeugung feinster Partikeln im Dispergierraum des Rotor-Stator-Systems ist es wichtig, dass diese stabilisiert werden. Insbesondere bei Emulsionen hat es sich gezeigt, dass eine Stabilisierung in turbulenter Strömung zum Vermeiden der Koaleszenz der Tröpfchen beiträgt. Im Rahmen der Erfindung wird daher eine Auslasseinrichtung geschaffen, mit welcher im gesamten Raum zwischen dem äußeren Zahnkranz des Stators und dem benachbarten Gehäuse 40 der Dispergiermaschine, welches in eine Aulasseinrichtung übergeht, ein turbulenter Produktstrom aufrecht erhalten werden kann. Die Auslasseinrichtung ist daher so ausgeführt, dass ein großer sanfter kontinuierlicher Übergang für das Fluid nach der Passage des äußeren Zahnkranzes des Stators hin zur Abführvorrichtung aus der Rotor-Stator-Dispergiermaschine geschaffen wird. Dadurch können insbesondere hohe Staudrücke minimiert werden.

Dies wird durch ein großflächigen Auslasskanal erreicht. An den großflächigen Ober- und Unterseiten dieses Auslasskanals, also an dessen flachen Seite, kommt es durch die hohen Fließgeschwindigkeiten des Fluids im Betrieb der Vorrichtung zu Schwingungen bzw. Vibrationen, welche die turbulente Strömung unterstützen. Der erfindungsgemäßen Gestaltung der Auslasseinrichtung mit der speziellen Geometrie des Auslasskanals liegt die Erkenntnis zugrunde, dass das Fluid vor Erreichen der Auslasseinrichtung den Dispergierraum in Teilströmen passiert hat, welche bei ihrer Passage eine unterschiedliche Geschichte erfahren haben. Diese Teilströme werden im folgenden mit **â**1, **â**2, **â**3 und **â**4 bezeichnet.

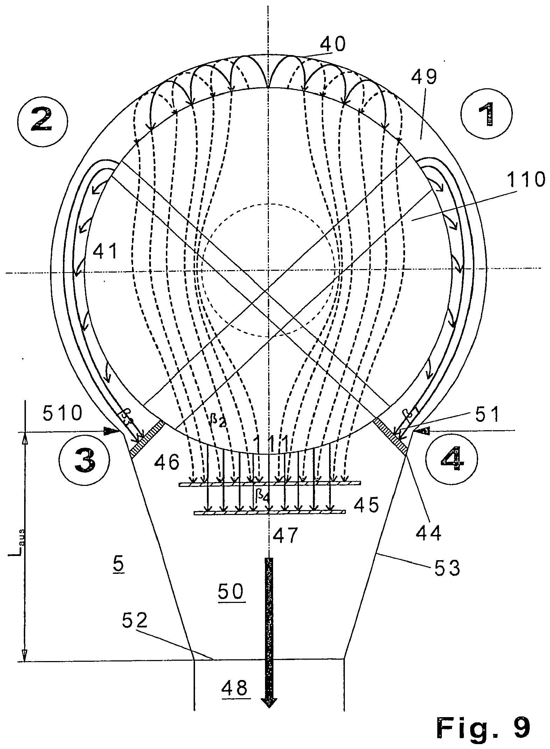

In den Figuren 8 und 9 sind die Wege dieser Teilströme schematisch dargestellt. Ein erster Teilstrom **â**2 verlässt den Dispergierraum des Rotor-Stator-Systems und wird, beginnend an der der Öffnung 51 hin zum Auslasskanal gegenüberliegenden Seite unter dem Rotor 41 entlang, in den Auslasskanal gefördert. Der Teilstrom **â**2 wird dabei durch die Drehbewegung des Rotors 41 beschleunigt. Diese zusätzliche Beschleunigung korreliert damit, dass der Teilstrom **â**2 den längsten Weg aller vier betrachteten Teilströme zurücklegen muß und daher dem größten Druckverlust begegnet.

Es sei betont, dass es sich bei den Ausführungen zu den Teilströmen **â**1 bis **â**4 und deren Weg hin zum Auslasskanal um eine Modellvorstellung handelt, welche sich als geeignet herausgestellt hat, um den Grundgedanken für die Gestaltung der erfindungsgemäßen Auslasseinrichtung zu erläutern. Ein zweiter Teilstrom **â**4 wird nach der Passage des Dispergierraums direkt hin zur Öffnung 51 in den Auslasskanal hinein gefördert. Dieser Teilstrom **â**4 erfährt die geringsten Druckverluste, da er nicht, wie die drei anderen Ströme umgelenkt wird. Um diesen geringen Druckverlust zu begegnen und die Unterschiede zu den drei anderen Teilströmen auszugleichen, kann der Bereich der Zähne des Stators, welche von dem Teilstrom **â**4 passiert werden, eine um zirka 10 bis 30 Prozent, vorzugsweise 10 bis 15 Prozent kleinere Durchlaßfläche als die übrigen Zähne aufweisen.

Während im Querschnitt in Figur 8 die beiden Ströme **â**2 und **â**4 der Übersichtlichkeit halber, jedoch nicht die Ströme **â**1 und **â**3 dargestellt sind, ist in der Aufsicht in Figur 9 die vollständige Einströmung in den Auslasskanal 50 mit allen vier Teilströmen schematisch dargestellt. Die in Figur 9 gezeigt Ansicht blickt auch den Rotor 41 aus der in Bezug auf die Darstellung in Figur 8 von unten gesehenen Perspektive. Der Rotor 41 und mit ihm der Dispergierraum des Rotor-Stator-Systems wird außen vom Gehäuse 40 umgeben. Zwischen dem Rotor 41 und dem Gehäuse 40 ist ein Ringkanal 49 ausgebildet.

Die Teilströme **â**1 und **â**3 verlassen den Dispergierraum des Rotor-Stator-Systems seitlich, das heißt bezogen auf die Papierebene von Figur 8 nach vorne oder nach hinten. Im Ringkanal 49 werden die Teilströme **â**1 und **â**3 hin zum Auslasskanal 50 gefördert. Dreht der Rotor 41 entgegen dem Uhrzeigersinn (vergleiche Figur 8), kann ein Teil des Teilstroms **â**1 unter den Rotor 2 gefördert und mit dem Teilstrom **â**2 vermischt werden. Zum großen Teil wird der Teilstrom **â**1 jedoch in den Ringkanal 49 und von dort zum Auslasskanal 50 hin gefördert. Der Teilstrom **â**3 wird bei seinem Weg hin zum Ringkanal 49 und von dort zum Auslasskanal 50 durch Rotationsbewegung des Rotors unterstützt. Die vier Teilströme **â**1 bis **â**4 kommen bei ihrem Eintritt in den Auslasskanal 50 aus verschiedenen Richtungen an, prallen aufeinander und vermischen sich intensiv. Dies trägt dazu bei, dass die Strömung des Fluids auch nach Verlassen des Dispergierraums im turbulenten Bereich bleibt.

Die Auslasseinrichtung 5 umfaßt einen Auslasskanal 50, welcher eine erste Öffnung 51 hat, in den im Betrieb das Fluid aus dem Dispergierraum beziehungsweise aus dem Ringkanal 49 in den Auslasskanal 50 eintritt. Der Auslasskanal 50 weist eine zweite Öffnung 52 auf, durch welche im Betrieb das Fluid den Auslasskanal 50 verlässt. Die erste Öffnung 51 hat eine größere Querschnittsfläche als die zweite Öffnung 52. Die Auslasseinrichtung ist somit als ein konzentrisches Reduzierstück ausgebildet. Die erste Öffnung 41 ist rechteckig ausgebildet und hat ihre größte Breite 510 parallel zu der Ebene, in welcher sich der Rotor 41 dreht. Mit dem Bezugszeichen 44 wird die Durchflussfläche des Ringkanals an der Stelle bezeichnet, wo dieser in den Auslasskanal 50 übergeht.

Die Durchtrittsfläche 44 wird von dem Teilstrom **â**1 gemäß der Modellvorstellung passiert. Mit dem Bezugszeichen 45 wird die Durchtrittsfläche bezeichnet, durch welche gemäß der Modellvorstellung der Teilstrom **â**2 unter dem Rotor durchtritt. Mit dem Bezugszeichen 46 wird die Durchflussfläche des Ringkanals an der Stelle, wo dieser in den Auslasskanal 50 übergeht, bezeichnet. Die Durchflussfläche 46 wird gemäß der Modellvorstellung von dem Teilstrom **â**3 passiert. Die Durchflussfläche 47 ist die Durchflussfläche aus dem Dispergierraum heraus, wo gemäß der Modellvorstellung der Teilstrom **â**4 den Dispergierraum verlässt. Die Teilfläche 47 ist insbesondere die Fläche in dem Bereich, in welchem die Zähne des Stators derart gestaltet sind, dass sie eine um zirka 10 bis 30 Prozent, vorzugsweise 10 bis 15 Prozent kleinere Durchlassfläche, als die übrigen Zähne haben (vergleiche Ausführungen oben).

Die Durchlassflächen 44, 45, 46 und 47 sind alle in etwa gleich groß mit Ausnahme der Fläche 47, welche um mindestens 5 Prozent, vorzugsweise um mindestens 10 Prozent, bis zu höchstens 30 Prozent, vorzugsweise bis zu höchstens 15 Prozent kleiner als die übrigen Flächen ist. Die Summe der Durchflussflächen 44 bis 47 entspricht in etwa der freien Durchflussfläche in der Abführeinrichtung 48, welche an den Auslasskanal 50 angeschlossen werden kann. In dem Auslasskanal 50 und der anschließenden Abführvorrichtung 48 wird die Stabilisierung des Produkts in turbulenter Strömung abgeschlossen.

Dazu hat sich folgende Abstimmung der Durchflussflächen aufeinander als vorteilhaft herausgestellt. Bezug genommen wird auf die Querschnittsfläche der Rohrleitung 25 im Zwischenstück 2. Ihre Durchflussfläche wird mit 100 Prozent angesetzt. In Bezug darauf beträgt die Durchflussfläche durch den inneren Zahnkranz des Stators 430 etwa 50 bis etwa 85 Prozent. Die Durchflussfläche durch den äußeren Zahnkranz des Stators 433 beträgt etwa 35 bis etwa 70 Prozent. Die Summe der Flächen 44, 45, 46 und 47 beträgt etwa 35 bis etwa 65 Prozent. Die Durchflussfläche der Abführvorrichtung 48 beträgt ebenfalls etwa 35 bis etwa 65 Prozent.

Besonders wichtig ist, dass die Summe der Flächen 44 bis 47 etwa der Durchflussfläche der Abführvorrichtung 48 entspricht. Die oben genannten Verhältnisse der Durchflussflächen innerhalb des Dispergierraums tragen zur Unterdrückung der Kavitationsneigung im Dispergierraum bei. Die gewählten Verhältnisse für die Durchflussflächen zwischen den Zähnen des äußeren Zahnkranzes des Stators, sowie für die Flächen 44 bis 47 und die Abführvorrichtung 48 tragen zur Verhinderung eines Geschwindigkeitsabfalls nach dem Verlassen des Dispergierraums bei. Die kritische Durchflussmenge ist ß1.

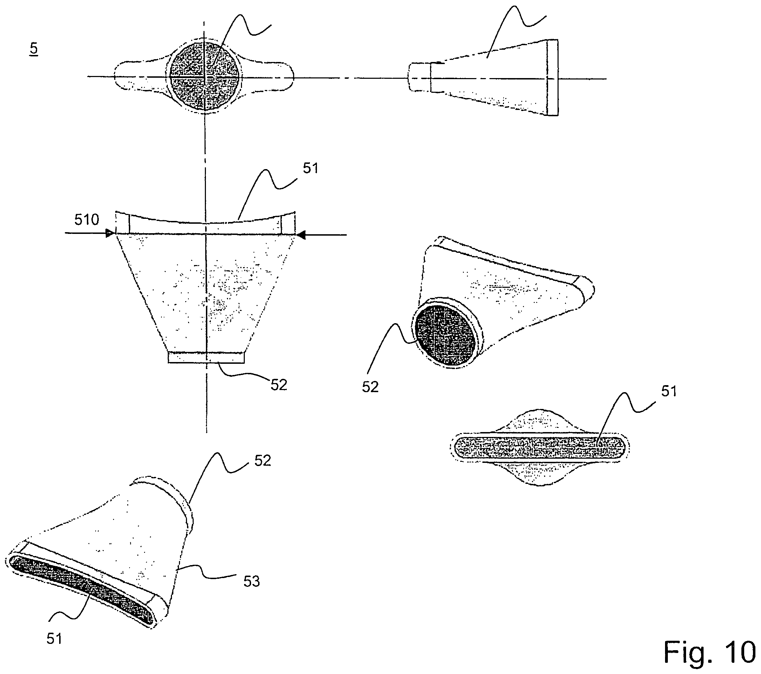

In Figur 10 ist die Auslasseinrichtung 5 in verschiedenen Perspektiven dargestellt. Links oben ist eine Vorderansicht der Auslasseinrichtung 5 gezeigt, in welcher die zweite Öffnung des Auslasskanals 52 dem Betrachter zugewandt ist. In der rechts oben gezeigten zweiten Ansicht erkennt man die im wesentlichen konische Form der Auslasseinrichtung 5 mit dem als Konus bezeichneten Teil 53. Auf der linken Seite in der Mitte in Figur 10 ist eine Aufsicht auf die Auslasseinrichtung 5 gezeigt in der Nachbarschaft der ersten Öffnung 51, mit welcher die Auslasseinrichtung 5 an eine entsprechende Öffnung in Gehäuse 40 der Rotor-Stator-Dispergiermaschine 4 angeschlossen werden kann, hat die rechteckige Öffnung der Auslasseinrichtung 5 ihre größte Breite 510.

Die auf der rechten Seite in Figur 10 unten gezeigte Rückansicht der Auslasseinrichtung 5 zeigt einen Blick in die im wesentlichen rechteckige Öffnung 51. Diese ist, vergleichen mit der kreisförmigen Öffnung 52 als ein langer und relativ schmaler Schlitz gestaltet, dessen Enden abgerundet sind. Die perspektivischen Darstellung auf der rechten Seite in der Mitte und auf der linken Seite unten für die Auslasseinrichtung 5 illustrieren, wie durch die Gestaltung der im wesentlichen konischen Form 53 ein sanfter geschwungener Übergang zwischen der Öffnung 51 und der Öffnung 52 erreicht wird.

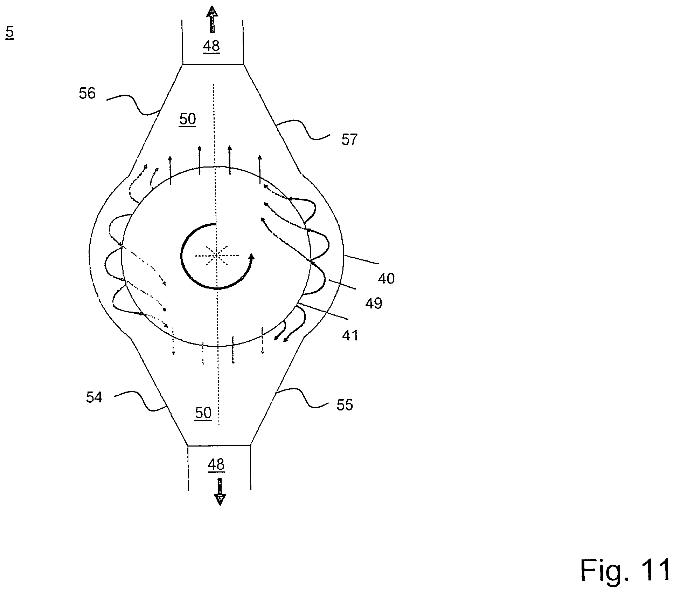

In Figur 11 ist eine Ausführungsform der erfindungsgemäßen Auslasseinrichtung 5 gezeigt. Diese umfaßt zwei Auslasskanäle 50, welche in der gezeigten Darstellung einander gegenüberliegen. Von beiden Auslasskanälen 50 aus wird im Betrieb das Fluid in eine oder mehrere Abführvorrichtungen 48 geleitet. Diese sind durch den ausgeführten Pfeil angedeutet. Im Ringkanal 49 zwischen dem Rotor-Stator-Dispergiersystem und dem Gehäuse 40 erfolgt eine Umlenkung des Fluids, welches den Dispergierraum verlässt.

Diese Umlenkung ist durch die Pfeile mit durchgezogenen Linien dargestellt. Das Fluid wird in Richtung auf die beiden Auslasskanäle 50 hin gelenkt. Mit den gestrichelten Pfeilen sind die Teilströme angedeutet, in denen das Fluid im Betrieb unter dem Rotor hin zu den Auslasskanälen 50 gelenkt wird. Die Auslasskanäle haben Seitenwände 54 und 55 beziehungsweise 56 und 57. Am Übergang zwischen einer Seitenwand 54, eines Auslasskanals 50 zu der Seitenwand 56 des benachbarten Auslasskanals 50 befindet sich ein Abschnitt des Ringkanals 49. Der Ringkanal 49 wird somit von den Auslasskanälen 50 unterbrochen.

Die Auslasseinrichtrung mit zwei Auslasskanälen kann über ein zwischengeschaltetes T-Stück (nicht dargestellt) mit einer Zirkulationsleitung verbunden werden. Die in Figur 11 gezeigten Abführeinrichtungen 48 werden somit in eine gemeinsame Leitung zusammengeführt. Vor dem Eintritt in die beiden Zuführstutzen des T-Stücks können in jeder Abführeinrichtung 48 beziehungsweise in jedem Auslasskanal 50 und/oder in der gemeinsamen Abführleitung des T-Stücks Ventile vorgesehen sein (vergleiche auch unten die Beschreibung zu Figur 14), mit welchen die Gegendrücke in den beiden Produktströmen der Zuführstützen des T-Stücks eingestellt werden können, insbesondere um Kavitation zu vermeiden.

Die Funktionsweise des in Figur 11 gezeigten dualen Systems einer Auslasseinrichtung mit zwei Auslasskanälen basiert auf den Modellvorstellungen, wie sie oben anhand von Figur 9 erläutert wurde. Die Auslasseinrichtung mit zwei Auslasskanälen stellt demgegenüber eine Verbesserung dar, da es mit den beiden breiten Auslasskanälen weniger Umlenkungen des Fluids nach dem Verlassen des Dispergierraums gibt. Damit wird das Risiko für die Ausbildung von Toträumen und somit teilweise laminaren Durchfluss nach dem Dispergierraum weiter minimiert. Die Auslasseinrichtung mit zwei Auslasskanälen bietet die Möglichkeit, das Produkt, welches rechtwinklig zu den beiden Auslasskanälen aus dem Dispergierraum ausgestoßen wird, durch die Drehung des Rotors 41 auf einen Auslasskanal 50 zu zu beschleunigen.

Die Durchtrittsflächen in dem Bereich des äußeren Statorzahnkranzes, welcher einem Auslasskanal 50 benachbart ist, sind den Flächen im Auslasskanal angepaßt. Die Auslegung erfolgt derart, dass im Betrieb für das betreffende Fluid eine Reynolds-Zahl oberhalb von 10.000 eingehalten werden kann. Dadurch wird auch einer Koaleszenz von Tropfen einer Emulsion bei der Passage der Auslasskanäle und des Übergangs vom Dispergierraum in die Auslasskanäle entgegengewirkt.

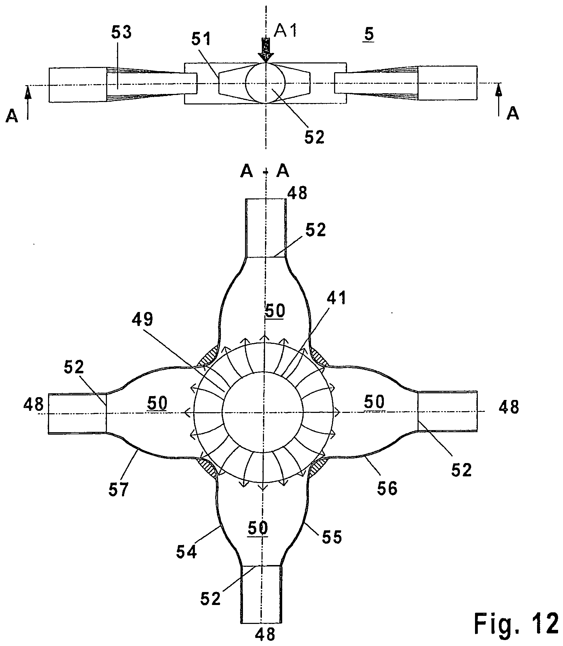

In einer weiteren Ausführungsform der Erfindung umfaßt die Auslasseinrichtung 5 vier Auslasskanäle 50. Diese Ausführungsform ist in Figur 12 dargestellt. Die Kontur der Auslasskanäle 50 ist so gewählt, dass beim Übergang zwischen den Kanälen nur kleine Stege verbleiben und dadurch nur sehr geringe Staudrücke entstehen können, die den Durchfluss in turbulenter Strömung kaum bremsen. Die sanften gechwungenen Übergänge von den Stegen zu den Auslasskanälen 50 minimieren den Staudruck in jedem Auslasskanal.

Der Übergang von einer Seitenfläche 54 (55) in die Seitenfläche 57 (56) des jeweils benachbarten Auslasskanals 50 verläuft bogenfömig. Die Pfeile in der in Figur 12 unten dargestellten Schnittansicht illustrieren die Modellvorstellung zum Durchfluss des Fluids durch Auslasseinrichtung 5 beim Austritt aus dem Ringkanal 49 und dem Eintritt in die Auslasskanäle 50. Sollte sich an den Stegen am Übergang zwischen zwei benachbarten Auslasskanälen 50 ein Staudruck ausbilden, würde das Produkt kurzzeitig unter den Rotor gedrückt werden, dort beschleunigt und dann in den nächsten Auslasskanal gepreßt werden.

Die Auslasseinrichtrung mit vier Auslasskanälen kann über ein zwischengeschaltetes Doppel-T-Stück (nicht dargestellt) mit einer Zirkulationsleitung verbunden werden. Die in Figur 12 gezeigten Abführeinrichtungen 48 werden somit in eine gemeinsame Leitung zusammengeführt. Vor dem Eintritt in die vier Zuführstutzen des Doppel-T-Stücks können in jeder Abführeinrichtung 48 beziehungsweise in jedem Auslasskanal 50 und/oder in der gemeinsamen Abführleitung des T-Stücks Ventile vorgesehen sein (vergleiche auch unten die Beschreibung zu Figur 14), mit welchen die Gegendrücke in den vier Produktströmen der Zuführstützen des Doppel-T-Stücks eingestellt werden können, insbesondere um Kavitation zu vermeiden.

Passend zu der in Figur 12 gezeigten Auslasseinrichtung 5 mit vier Auslasskanälen 50 kann der in Kombination mit der Auslasseinrichtung 5 verwendete Stator der Dispergiermaschine derart gestaltet sein, dass die Statorabschnitte, welche den Eintrittsöffnungen der Auslasskanäle 50 gegenüberstehen, eine passend zu den Eintrittsöffnungen der Auslasskanäle 50 dimensionierte Austrittsfläche aufweisen. Beispielsweise unter Zuhilfenahme von Strömungssimulationen kann der Fachmann diese Auslegung derart durchführen, dass im Betrieb eine Reynolds-Zahl von Re < 10.0000 eingehalten werden kann. Dabei wird die Gesamtsumme der Eintrittsflächen in die Auslasskanäle 50 kleiner oder gleich der Gesamtsumme der Austrittsflächen aus dem Stator betragen.

Durch die oben beschriebenen Maßnahmen für das Zwischenstück 2 und die Auslasseinrichtung 5 wird gewährleistet, dass das Fluid von dem Behälter, in welchem es vorgelegt wird, hin zur Verarbeitung in der Rotor-Stator-Dispergiermaschine und nach der Verarbeitung darin bei der Entnahme aus der Dispergiermaschine mit Hilfe der Auslasseinrichtung stets in turbulenter Strömung gehalten wird. Wie anfangs dargestellt, ist es manchmal erforderlich, Fluide nach einem Durchlauf durch die Dispergiermaschine zumindest einem weiteren Durchlauf auszusetzen. Dazu weisen entsprechende Anlagen eine Zirkulationsleitung auf, welche als Abführvorrichtung an die Auslasseinrichtung angeschlossen werden kann.

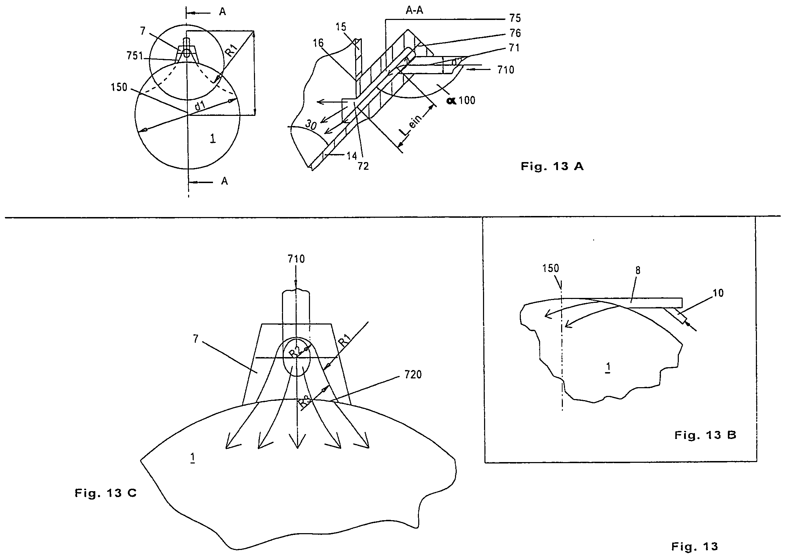

Diese Zirkulationsleitung führt das Produkt, welches über die Auslasseinrichtung die Dispergiermaschine verlässt, dem Behälter wieder zu. Um auch die Zuströmung zu dem Behälter zu optimieren, wurde ein Einlaufstutzen geschaffen. Das Produkt hat in der Zirkulationsleitung eine sehr hohe Fließgeschwindigkeit, beispielsweise im Bereich zwischen 2 und 4 m/s, und neigt beim ungebremsten Eintritt in dem Behälter zum Spritzen. Der Einlaufstutzen trägt dazu bei, die Fließgeschwindigkeit beim Eintritt des rückgeführten Produkts in den Behälter allmählich herabzusetzen und dass sich das hereinströmende Produkt sanft über den Konusboden in das schon im Behälter vorgelegte Produkt einfügt, besonders bei einer Füllhöhe im Behälter, die unterhalb des Einlaufstutzens liegt. In Figur 13 ist ein solcher Einlaufstutzen schematisch dargestellt. Auf der rechten Seite in Figur 13A ist eine Schnittansicht gezeigt, welche den Einlaufstutzen 7, der in eine Öffnung 16 in der Behälterwand 15 übergeht, zeigt.

Der Einlaufstutzen 7 hat eine Einlauföffnung 71, durch welche das über die Abführvorrichtung zurückgeführte Fluid in den Einlaufstutzen 7 eintritt. Die Einlauföffnung 71 ist als Durchgangsbohrung mit dem Durchmesser D₂ in der Seitenwand des Einlaufstutzens 7 ausgebildet und hat eine Längsachse, welche die Senkrechte 180 auf die Längsachse 150 des Behälters 1 ist. Der Einlaufstutzen 7 hat des weiteren eine Zulauföffnung 72, mit welcher der Einlaufstutzen 7 in die Behälterwandöffnung 16 mündet. Zwischen der Einlauföffnung 71 und der Zulauföffnung 72 verläuft eine Rohrleitung 75 des Einlaufstutzens 7. Die Rohrleitung 75 des Einlaufstutzens hat eine Längsachse 76, welche mit der senkrechten 180 auf die Längsachse des Behälters einen Winkel α₁₁₀ einschließt.

Der Einlauf zum Behälter ist so konstruiert, dass die Fläche vom Eingangsrohr, das heißt die Querschnittsfläche 710 der Einlauföffnung 71 maximal 50 Prozent der Fläche des Produkteintritts in den Behälter, das heißt der Querschnittsfläche 720 der Zulauföffnung 72 entspricht. Wie die Aufsicht in der linken Seite von Figur 13A zeigt, öffnet sich die Kontur der Rohrleitung 75 in dem Bereich 751, welcher in die Einlauföffnung 71 mündet, zum Behälter 1 hin über einen Radius R₁ nach außen.

Dadurch wird im Betrieb das in den Behälter einströmende Produkt über einen großen Bereich des Behälterbodes verteilt. Eine plötzliche Erweiterung in den Bereich 751 wird damit verhindert, so dass das Auftreten eines Borda-Carnot-Stoßverlustes unterbunden wird. Durch einen Borda-Carnot-Stoß könnten in einem Bereich des Fluids im Behälter, in den durch den Einlaufstutzen zurückgeführtes Produkt eintritt, starke Verwirbelungen auftreten. Die Länge dieses Bereichs mit Verwirbelungen würde etwa das zehnfache des Durchmessers der Zulauföffnung 72 betragen. Das Produkt soll aber gleichmäßig dem Fluid zugeführt werden können, welches sich noch im Behälter 1 befindet. Durch vorteilhafte Konstruktion wird das Produkt unter einem Winkel α₁₁₀ von zirka 90° bis 150° gegen die gegenüberliegende Wand geführt und dadurch sich ausbreitend in der Rohrleitung 75 zum Behälter gedrückt. Die Geschwindigkeit nimmt kontinuierlich ab und das Produkt folgt der speziellen Kontur im Bereich 751 der Zulauföffnung. Hierbei entstehen keine Verwirbelungen, welche die Strömungsführung des Fluids im Behälter stören könnten. Die Gesamtlänge L_{Ein} des Einlaufstutzens braucht dabei lediglich das zwei- bis sechsfache des Durchmessers D_{Ein} der Einlauföffnung 71 sein. Je länger diese Länge des Einlaufstutzens ist, desto größer ist die Beruhigung des eintretenden Mediums in den Behälter.

In einer Weiterbildung kann der Winkel α₁₁₀ in einem Bereich zwischen 45° und 180° liegen. Beträgt der Winkel 180°, kann der Einlaufstutzen, wie in Figur 13B gezeigt, zur Ausbildung eines oberen Einlaufes in den Behälter horizontal an die obere Wölbung des Behälters herangeführt werden. Der Einlass kann auch vertikal zum Behälter gestaltet werden, so dass das Produkt an der Behälterwand heruntergeführt und auf den Produktspiegel des im Behälter befindlichen Produkts verteilt werden kann.

Die folgende Tabelle bietet eine Übersicht über mögliche Verhältnisse der Querschnittsflächen 710, 720 bei unterschiedlichen Nenndurchmessern DN der Rohrleitung 75 des Zwischenstücks 7:

| **Nenndurchmesser von 75** | **710 in mm²** | **720 in mm²** |
|---|---|---|
| DN 40 (41x1,5mm) | 1134 | 120x20= 2400 |
| DN 50 (53x1,5mm) | 1963 | 200x20= 4000 |
| DN 65 (70x2,0mm) | 3420 | 250x30= 7500 |
| DN 80 (85x2,0mm | 5150 | 250x40=10.000 |
| DN 100 (104x2,0mm), | 7850 | 320x50=16.000 |

In Figur 13C ist eine weitere Ausführungsform für den Einlaufstutzen 7 dargestellt. Zusätzlich zur in Bezug auf die Längsachse 76 der Rohrleitung 75 gesehen konkaven Ausbildung mit dem Krümmungsradius R₁ weist der Bereich 751, in welchem die Zulauföffnung in den Behälter mündet, der Behälterwandöffnung 16 zugewandte Bereiche auf, in welchen die Zulauföffnung in Bezug auf die Längsachse 76 der Rohrleitung 75 gesehen konvexe Konturen hat. Dort hat die Öffnung einen Krümmungsradius R₃ beziehungsweise R₂. Der Radius R₃ beziehungsweise R₂ beträgt mindestens das 1,2-fache der Hälfte des Behälterdurchmessers D₁ und höchstens das Doppelte der Hälfte des Behälterdurchmessers D₁.

In Figur 14 ist eine Anlage 120 dargestellt, welche einen Behälter 1 umfaßt. Die im Inneren der schematischen Darstellung des Behälters 1 eingetragenen Prozentangaben illustrieren verschiedene Füllstände des Behälters, angefangen von 100 Prozent oben bis zu einem Füllstand von 4 Prozent, bei welchem das betreffende Fluid sich lediglich im konisch zulaufenden Behälterbodenbereich befindet. Aus dem Behälter 1 tritt das Fluid im Betrieb in das Zwischenstück 2 ein, bevor es der Rotor-Stator-Dispergiermaschine 4 zugeführt wird. Nach der Behandlung im Dispergierraum tritt es durch die Auslasseinrichtung 5 aus der Rotor-Stator-Dispergiermaschine 4 aus. An die Auslasseinrichtung 5 ist eine Abführvorrichtung 48 in Form einer Rohrleitung angeschlossen, welche eine Zirkulationsleitung 10 bildet. Über die Zirkulationsleitung 10 wird das Produkt wieder dem Behälter zugeführt. In der Darstellung in Figur 14 eingezeichnet, sind zwei Einlaufstutzen 7 und 8, durch welche das Produkt in das Behälterinnere zurückgeführt werden kann. Hat das Produkt die gewünschten Eigenschaften erreicht, kann es über eine Entnahmevorrichtung 100 der Anlage 120 entnommen werden. In die Abführvorrichtung 48 ist ein Ventil 9, insbesondere ein Drosselventil, eingebaut, um den Durchfluss in der Zirkulationsleitung einstellen, beziehungsweise steuern, beziehungsweise regeln zu können.

Das Ventil 9 kann in einer Ausführungsform als Bestandteil einer Regeleinheit sein und als Einstellventil, zum Beispiel als Klappenventil mit Feststellarretierung ausgebildet sein. Die Regeleinheit umfaßt neben dem Regelventil einen Durchflussmesser zur Kontrolle des Volumenstroms. Die Verweilzeit im Rotor-Stator-System, insbesondere im Dispergierraum kann dann durch das Ventil 9 kontrollierbar eingestellt werden. Bei gleicher Drehzahl kann damit die Verweilzeit im Rotor-Stator-System durch den mit dem Ventil 9 einzustellenden Gegendruck variiert werden. Werte für die Verweilzeit zwischen 0,05 Sekunden und 0,5 Sekunden haben sich als sinnvoll herausgestellt. Es können auch alle Auslasskanäle 50 der Auslasseinrichtung 5 mit einem Ventil und Durchflussmesser versehen sein, um den jeweiligen Durchfluss regeln zu können.

Die Dispergiermaschine ist mit einem Frequenzumrichter (nicht dargestellt) ausgerüstet, so dass die Drehzahl des Rotors wählbar ist. Neben der Drehzahl des Rotors ist damit der Volumenstrom durch die Anlage 120 und/oder der Gegendruck flexibel einstellbar. Insbesondere können für die Verwendung der Anlage zum Dispergieren einerseits und für die Reinigung der Anlage, beispielsweise für die CIP-Reinigung, unterschiedliche Parameter für die Drehzahl, den Durchfluss und den Gegendruck eingestellt werden, um die jeweiligen Prozesse möglichst optimal fahren zu können.

Nach der Passage des Ventils 9 tritt das Fluid in die Zirkulationsleitung 10 ein. Aus dieser kann es über die Entnahmestelle 100 entnommen oder in die Dispergiermaschine zurückgeführt werden. Die Anlage 120 ist derart konzipiert, dass dem Produkt in verschiedenen Stadien weitere Zutaten in fester und/oder flüssiger Form zugegeben werden können.

Beispiele für solche Zutaten sind unter anderem Wirkstoffe oder Trägersubstanzen wie Liposome, welche feindispergiert dem Fluid zugegeben werden können. Dazu umfaßt die Anlage 120 mehrere Zuführeinrichtungen. Beispielsweise ist ein Injektor 64 vorgesehen, welcher in der Abführvorrichtung nach der Auslasseinrichtung 5 positioniert ist. Über den Injektor können insbesondere pulverförmige Zutaten dem Fluid beigemengt werden. Weitere Zuführvorrichtungen 60, 61, 62 und 63, 66 erlauben die Zugabe von Zutaten in der Zirkulationsleitung beziehungsweise Abführeinrichtung, in den Dispergierraum, insbesondere in den Ringkanal 49, und in die Rohrleitung des Zwischenstücks 2. Als Injektor kann auch eine Düse, beispielsweise eine Ring- oder Flachdüse verwendet werden, wie sie im Gebrauchsmuster des Anmelders DE 20 2006 001 952 als "Vorrichtung zum Herstellen von Dispersionen" beschrieben wird. Auch vor der Entnahme 100 sowie in der Zirkulationsleitung und der Leitung, welche zu der Zuführeinrichtung 66 in die Dispergiermachine 4 führt, können weitere Ventile eingebaut sein.

Das Einbringen der weiteren Zutaten über den Injektor in die Abführvorrichtung 48, welche sich an die Auslasseinrichtung 5 anschließt, geschieht bei leichten Unterdrücken im Behälter, das heißt einem Druck, der etwa 0,3 bar geringer ist als der Umgebungsdruck. Bei höheren Drehzahlen, das heißt Fliessgeschwindigkeiten um etwa 3 bis 4 m/s erzeugt der Injektor einen Unterdruck, der ausreichend ist, Flüssigkeiten one zusätzlich angelegtes Vakuum in das Fluid einzusaugen. Die eingebrachten Zutaten werden durch den Injektorstrahl sofort in das Fluid eingemischt.

Eine weitere Verbesserung zur Aufrechterhaltung einer turbulenten Strömung im Durchfluss durch die Anlage 120 kann dadurch erreicht werden, dass an das Gehäuse 40 der Rotor-Stator-Dispergiermaschine 4 und/oder an die Auslasseinrichtung 5 zumindest ein Vibrator (nicht dargestellt) angebracht wird. Um die damit verbundenen Schwingungen des mit dem Vibrator verbundenen Bauteils im Betrieb nicht auf die gesamte Anlage 120 zu übertragen, sind in der Zirkulationsleitung flexible Elemente 105.1 wie zum Beispiel Abschnitte aus ausreichend biegsamen Material vorgesehen.

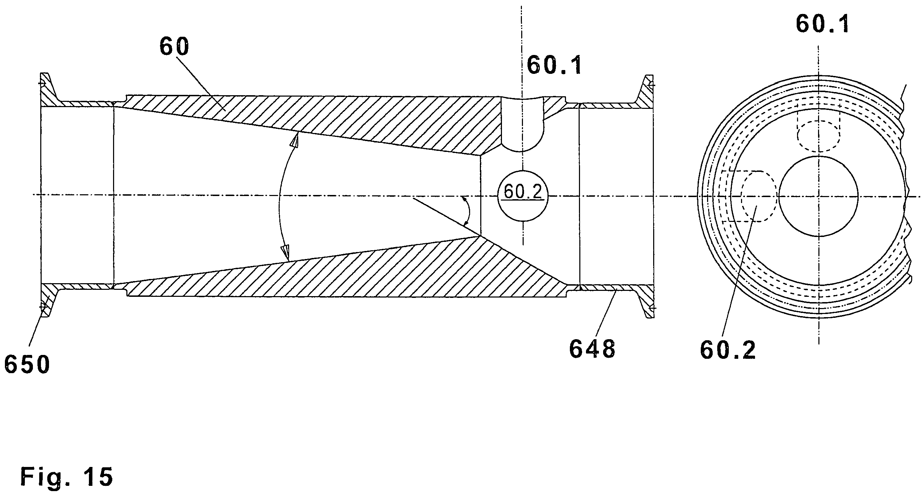

In Figur 15 ist eine Ausführungsform für eine Zuführeinrichtung 60 gezeigt. Die Zuführeinrichtung 60 kann mit einem Verbindungselement 650, beispielsweise einem Flansch, an die Auslasseinrichtung 5 angeschlossen werden. Mit einem Verbindungselement 648 kann die Zuführeinrichtung 60 an die Abführeinrichtung 48, insbesondere an die Rohrleitung des Zirkulationsrohrs 10, angeschlossen werden. Für die Zugabe von weiteren Zutaten, die dem Fluid beim Verlassen der Rotor-Stator-Dispergiermaschine zugesetzt werden sollen, weist die Zuführeinrichtung 60 Zuführkanäle 60.1 und 60.2 auf. Je nach Anzahl der betreffenden Zutaten können auch noch mehr Zuführkanäle vorgesehen sein.

Die Zuführeinrichtung 60 ist in ihrem Inneren im wesentlichen als eine Rohrleitung mit einer Wandkontur in Form eines Doppelkonus ausgebildet. In Strömungsrichtung (in Figur 15 von links nach rechts) gesehen verengt sich der Durchmesser zunächst unter einem Konuswinkel von 150° auf die engste Stelle hin und erweitert sich dann unter einem Konuswinkel von 58,6°. Damit wird ein Carnot'scher Stoßdiffusor geschaffen, welcher im Betrieb solche Strömungsverhältnisse erzeugt, in denen auch pulverförmige Zutaten über die Zuführöffnungen 60.1, 60.2 zugeführt und sehr schnell homogen in dem in der Zuführeinrichtung 60 strömenden Fluid verteilt werden können. Die angegebenen Winkel für die Koni sind Beispiele, welche sich als vorteilhaft erwiesen haben. Je nachdem, für welche Art von Fluid die Zuführeinrichtung 60 vorgesehen ist, wird der Fachmann die Winkel anpassen.

Damit diese Strömungsverhältnisse möglichst lange für das aus der Zuführeinrichtung ausströmende und in der Abführeinrichtung 48 weiter transportierte Fluid erhalten bleiben beziehungsweise damit ein allmählicher Übergang in die Durchströmung der Abführeinrichtung erfolgt, ist die Austrittsöffnung der Zuführeinrichtung 60 mit dem Radius R₅ abgerundet ausgebildet.

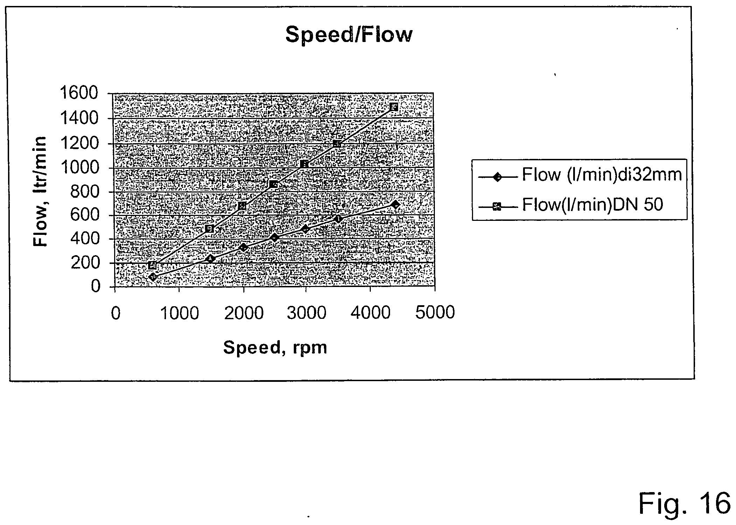

Im Diagramm in Figur 16 ist der Volumenstrom in Litern/Minute über der Drehzahl in Umdrehungen/Minute des Rotor-Stator-Dispergiermaschine für zwei unterschiedliche Durchmesser di32mm und DN50 aufgetragen. Dazu wurde zum einen eine Zuführeinrichtung (siehe Figur 15) eingebaut mit einem Eintritt DN50 und einer Reduzierung auf 32 mm. Zum anderen wurde eine Zirkulationsleitung mit DN50 ohne Zuführeinrichtung verwendet. Die verwendete Rotor-Stator-Dispergiermaschine hatte eine Nennleistung von 22 kW und wurde mit einem Zwischenstück betrieben. Mit steigender Drehzahl nimmt der Volumenstrom kontinuierlich zu.

In Figur 16 ist eine Drehmomentenkurve dargestellt, welche mit einem Behälter eines Fassungsvermögens von 500 Litern bei einem Füllstand im Behälter von 50 Litern aufgenommen wurde. Die verwendete Rotor-Stator-Dispergiermaschine hatte eine Nennleistung von 22 kW und wurde mit einem Zwischenstück betrieben. Die Rückführung des Produkts in den Behälter erfolgte mit einem Einlaufstutzen 7. Die Drehmomentenkurve zeigt deutlich die kontinuierliche Zunahme des Drehmoments ("Torque"), welches in % bezogen auf das maximale Drehmoment angegeben wird, das bei der maximalen Drehzahl des Rotor-Stator-Systems erreichbar ist. Des Weiteren steigt der jeweils aufgenommene Strom ("Amp"), welcher in Ampere angegeben ist, mit zunehmender Drehzahl des Rotor-Stator-Systems kontinuierlich an.

Die kontinuierliche Zunahme des Volumenstroms sowie des Drehmoments mit steigender Drehzahl der Rotor-Stator-Dispergiermaschine zeigt, dass durch das Zwischenstück auch bei geringen Füllständen wie 10% des Behälters ein Einfluss der Rotation des Behälterinhalts auf die Förderleistung der Rotor-Stator-Dispergiermaschine im Betrieb der Anlage unterbunden wird.

Es wird somit die Möglichkeit geschaffen, einen relativ großen Ansatzbehälter 1 zur Verarbeitung auch kleinerer Ansatzvolumina zwischen 3% und 10% des maximalen Behälterfüllstandes verwenden zu können. Mit herkömmlichen Anlagen benötigt man zum Abdecken des üblichen Bereiches an Ansatzgrößen neun verschiedene Behälter, während man mit der Erfindung mit vier Behälter auskommt. Ein Behälter kann mit einer Anlage, die das Zwischenstück verwendet, den Bereich zwischen 40 und 500 Litern abdecken, wobei herkömmliche Lösungen dafür jeweils einen Behälter für 40 bis 100 Liter, 100 bis 250 Liter, 200 bis 500 Liter und 350 bis 1000 Liter benötigt. Ein weiterer Behälter kann den Bereich zwischen 150 und 2000 Litern abdecken, wobei herkömmliche Lösungen dafür jeweils einen Behälter für 700 bis 2000 Liter und 1500 bis 4000 Liter benötigen. Ein weiterer Behälter kann den Bereich zwischen 500 und 6000 Litern abdecken, wobei herkömmliche Lösungen dafür jeweils einen Behälter für 2000 bis 6000 Liter und 4000 bis 12000 Liter benötigen. Ein weiterer Behälter kann schließlich den Bereich zwischen 15000 und 20.000 Litern abdecken, wofür herkömmliche Lösungen einen Behälter für 7000 bis 20.000 Liter brauchen.

### Beispiel 1: Haarfarbe

Für einen Ansatz von 100 kg in einer Anlage mit einem 500 kg fassenden Behälter werden einem ersten Ansatzschritt 4kg Texapon in 20 kg Wasser dispergiert. Dies stellt für die beschriebene Anlage mit einem Zwischenstück kein Problem dar, da durch den Anschlusswinkel der Dispergiermaschine zum Behälter und durch den Propeller im Zusammenspiel mit dem flexiblen Element wie dem Gummibalg die Rotation des Produkts beim Eintritt in die Dispergiermaschine unterdrückt wird.

### Beispiel 2: Reinigung

Es wird das Minimieren des Wasserbedarfs bei einer CIP- oder SCIP-Reinigung ermöglicht aufgrund der möglichen minimalen Mindestwassermengen (Füllmengen des Behälters) von 4-5 % der Batchgröße. Eine Anlage wie im Beispiel 1 beschrieben kann mit 40 Litern Gesamtmenge, in zwei Reinigungsgängen vollständig gereinigt werden.

### Beispiel 3:

### Herstellen von Anti-Aging-Creams, welche Liposomen enthalten

Zum Einbringen von Nano-Partikeln wie zum Beispiel Liposomen in Kosmetika kann eine Flach- oder Ringdüse an verschiedenen Positionen zwischen dem Ansaugkanal und dem Auslasskanal angebracht werden (siehe Bezugszeichen 63, 64, 65). Aufgabe der Flach- oder Ringdüse ist es, hier kleinste Partikel bei hohen Drücken zu erzeugen und in den Fluidstrom, welcher die Rotor-Stator-Dispergiermaschine zu durchlaufen hat, hineinzusprühen. Die Flach- oder Ringdüse wird als Düse eines Hochdruckhomogenisators betrieben und kann insbesondere wie in dem oben zitierten deutschen Gebrauchsmuster des Anmelders beschrieben ausgestaltet sein. Die Position 63 ist besonders gut geeignet, da der Propeller mit Führungshülse als Fördermittel im Zwischenstück 2 eine gute Vermischung erreicht. Jedoch kann die Flach- oder Ringdüse auch in einen oder mehren der weiteren Anschlüsse 66 angebracht werden.

Die Erfindung kann gemäß weitren Ausführungsbeispielen auch in Anlagen eingesetzt werden, die nach dem Prinzip der Late Product Differentiation arbeiten. Die Vorgehensweise bei der Late Produkt Differentiation ist im Allgemeinen die folgende. Man stellt große Ansätze eines Basisproduktes her, das dann gemäß des täglichen Produktionsbedarfs mit den noch fehlenden Zutaten beziehungsweise Rohstoffen wie zum Beispiel Farben, Geschmacksstoffen, Duftstoffen und/oder anderen Zusätzen, welche insbesondere aufgeteilt in Teilmengen zugesetzt werden können, fertig gestellt werden. Dies bedeutet, dass man große Ansatzgrößen kurz vor der Abfüllung in mehreren kleineren Teilmengen fertig stellt.

Durch diese Vorgehensweise erhöht man die Effektivität und Flexibilität der Produktion. Da in der Regel zwischen den einzelnen Schritten zur Herstellung der verschiedenen Teilmengen die Anlage gespült werden muß, ist es von großer Bedeutung, dass die erfindungsgemäße LPD-Unit sehr kompakt ist, um bei diesem Reinigungsschritt möglichst wenig Produkt zu verlieren. Ferner ist die erfindungsgemäße LPD-Unit einfach zu reinigen, beispielsweise durch CIP (Cleaning in place) und/oder automatisches Reinigen und Sanitisieren (SCIP). Ferner wird bei Nutzung der erfindungsgemäßen LPD-Unit verglichen mit herkömmlichen Anlagen extrem wenig Abwasser erzeugt.

### Beispiel 4A: LPD (Late Produkt Differentiation)

An der Zuführeinrichtung 61 wird eine Flach- oder Ringdüse mit der Anlage mit dem Rotor-Stator-System 4 kombiniert. Große Ansätze haben den Vorteil, das weniger manuelle Arbeit anfällt und das die Arbeitsgänge nur einmal statt mehrmals durchgeführt werden müssen. Dies gilt auch für Labor-Arbeiten. Für das Herstellen von Haarfarbe erfolgt daher das Einbringen der Einfärbung zweckmäßigerweise am Ende der Produktion des gesamten Ansatzes. Es wird zum Beispiel ein Ansatz von 20.000 kg Basisprodukt produziert, wobei die Einfärbung von cirka 10 kg zunächst nicht in das Basisprodukt eingebracht wird. Eine geeignete Anlage umfaßt eine Auslasseinrichtung mit zwei Auslasskanälen und hat eine Nennleistung von 45 KW. In der Anlage wird ein Volumenstrom von cirka 3000 L/min ungedrosselt umgepumpt. Die Umpumpzeit des Ansatzes beträgt cirka 7 Minuten Das Einfärbungsmittel wird cirka während einer einzigen Umpumpperiode zudosiert, dadurch entsteht ein sehr homogenes Produkt.

Falls man den Ansatz teilen möchte und zum Beispiel zwei oder mehrere Einfärbungen herstellen möchte, wird das Produkt nach der Entnahme 100 eingefärbt, wobei die Zirkulationsleitung geschlossen ist. Zwischen dem Einbringen der ersten und der zweiten Farbe wird eine Kleinmenge verworfen, welche eine Mischung der ersten und zweiten Farbe enthält. Anstatt einer Zuführvorrichtung 61, 62, 63, beispielsweise in Form einer Düse kann man in den Bereichen der Düsen auch zwei oder mehrere Düsen anbringen.

### Beispiel 4B: LPD (Late Produkt Differentiation)

Eine weitere Möglichkeit ist es, den fertigen Ansatz als eine Teilmenge über den Auslass 100 abzuziehen und den Überhang in den Dispergierraum zurückzuführen und dabei Farbstoff oder andere Zusätze durch eine Düse (bevorzugt 61, 62) zuzugeben, damit man eine intensivere Durchmischung erhält (mehrmaliger Durchlauf durch die Rotor-Stator-Dispergiermaschine).Die Rückführung in den Dispergierraum kann insbesondere über eine oder mehrere Vormischkammern des Rotor-Stator-Systems erfolgen, wenn ein Rotor-Stator-System verwendt wird, wie es in der deutschen Patentanmeldung DE beschrieben wird.
deutschen Patentanmeldung 10 2008 022 355.7 beschrieben wird.

Die Zirkulationsleitung wird hinter der Auslassleitung 100, durch ein Ventil abgesperrt. Sinnvollerweise fängt man mit den helleren Farben an die dann durch die dunklere Farbe leichter überdeckt werden kann. Daher ist es von Vorteil, einen Basis-Ansatz von einem Produkt herzustellen (Großansatz) und diesen dann beim Abpumpen vom Behälter fertig zustellen durch den Zusatz der noch ausstehenden Zusätze.

### Beispiel 4C: LPD (Late Produkt Differentiation) in spezieller LPD-Unit

Eine LPD-Unit ist eine kompakte Anlageneinheit für "Late-Product-Differentiation". Das bedeutet, dass bei der Herstellung eines Produktes, welches eine Emulsion, Dispersion, Suspension, Gemisch oder dergleichen sein kann, erst kurz vor der Abfüllung in Flaschen, Tuben, Töpfen oder sonstigen Gebinden, die letzten Zutaten in ein vorgefertigtes Basisprodukt, welches auch ein Konzentrat sein kann, hinein dispergiert werden. Es werden dazu unten zwei beispielhafte Lösungen vorgestellt, die als "LPD-Unit I" und "LPD-Unit II".

Für die LPD-Unit können insbesondere in vorteilhafter Weise Komponenten in Kombination miteinander verwendet werden, die teilweise Gegenstand weiterer Patentanmeldungen und Gebrauchsmuster des Anmelders sind. Es handelt sich dabei insbesondere um folgende Bauteile:
a) Eine oder mehrere Vormischkammern, wie in der Familie zur Patentanmeldung DE 10 2008 022 355.7-23.
b) Rotorgeometrie wie in der Familie zur Patentanmeldung DE 10 2008 045 820.1,
c) Ein oder mehrere Strombrecher (siehe oben),
d) Auslassvorrichtung in dualer Ausführung (siehe oben)
e) Mindestens eine Flach-oder Ringdüse gemäß dem Gebrauchsmuster DE 20 2006 001 952.

Auf die jeweilige Dispergiereinrichtung ist ein Mischkopf aufgesetzt, welcher Zu- und Abführeinrichtungen aufweist. Insbesondere kann der Mischkopf derart gestaltet sein, dass die in seinem Inneren ausgebildete Mischkammer im wesentlichen hohlkugelförmig ist. Ein derartiger Mischkopf wird im folgenden als "kugeliger Mischkopf" bezeichnet.

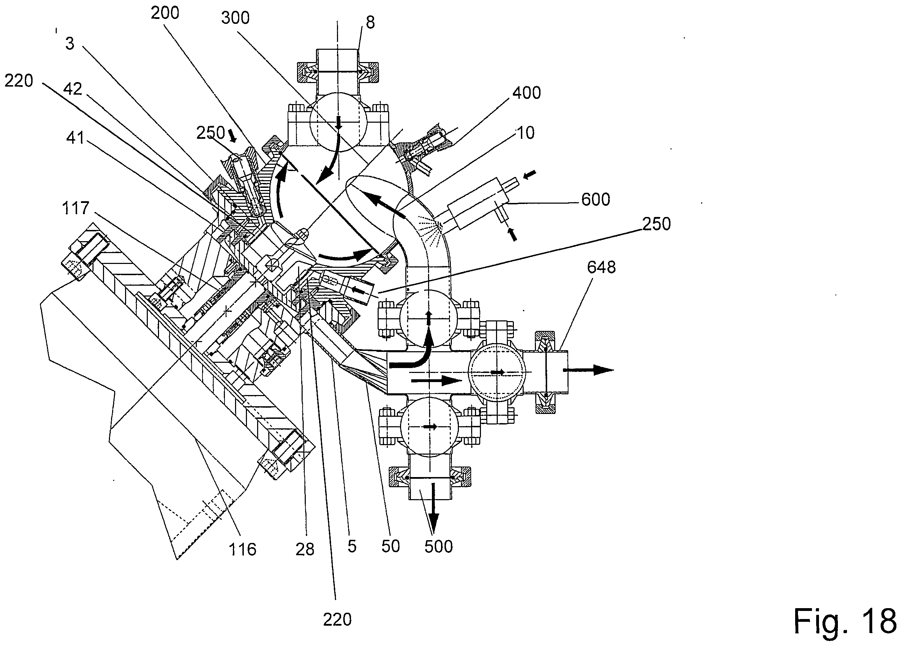

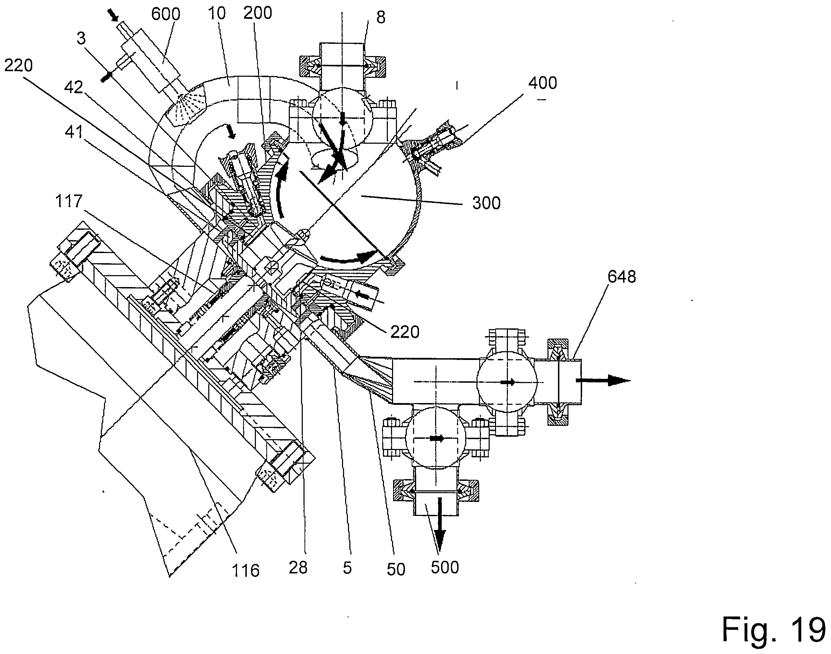

Die Funktionsweise der LPD-Unit wird im folgenden anhand der Figuren 18 und 19 beschrieben. Das zu verarbeitende Produkt wird, beispielsweise über einen Durchflusszähler (nicht gezeigt), durch den Produkteinlass 8, beispielsweise über ein automatisches Ventil, der kugeligen Mischkammer 300 zugeführt. Die kugelige Mischkammer 300 wird im gezeigten Beispiel zum einen von einem im wesentlichen halbkugelförmigen oberen Deckel, welcher Anschlüsse für den Produkteinlass 8, ein Ausblasventile 400 (siehe unten) und die Zirkulationsleitung 10 aufweist, gebildet, und zum anderen durch ein im Inneren ebenfalls im wesentlichen halbkugelförmiges LPD-Gehäuse 200, das in eine Rohrleitung mündet, in welcher ein Propeller 3 und Strombrecher 28 positioniert sind, und die das Produkt in den Dispergierraum von Rotor 41 und Stator 42 beziehungsweise Vormischkammern 220 führt.

Die laufende Dispergiermaschine 41, 42 saugt das Produkt an, und ein Teil des Produktes wird in der Vormischkammer 220 mit den fehlenden Zutaten in Kontakt gebracht. Diese fehlenden Zutaten werden insbesondere über Durchflusszähler (nicht gezeigt) und Pumpen (nicht gezeigt) über Zulaufvorrichtungen 250 zu den Vormischkammern 220 zugeführt. In den in den Figuren 18 und 19 gezeigten Ausführungsbeispielen sind jeweils zwei Vormischkammern vorgesehen. Im Rahmen der Erfindung kann die Anzahl der Vormischkammern in der LPD-Unit den jeweiligen Anforderungen jedoch angepasst werden, und mindestens eine sowie auch mehr als zwei Vormischkammern vorgesehen werden.

Die einzelnen Komponenten der Dispersion durchlaufen dann den Dispergierraum, werden dabei dispergiert, und die Dispersion zirkuliert über die Produktzirkulationsleitung 10 zurück in die Mischkammer 300. Die Produktzirkulationsleitung 10 wird dabei so in die Mischkammer 300 zurückgeführt, dass sie der Rotationsbewegung des Propellers 3 entgegen wirkt.

In der Regel hat die Mischkammer 300 cirka den Durchmesser des Rotors 41, um das Umpumpvolumen zu minimieren. Für den Rotor können beispielsweise in einer Art Baukastenprinzip folgende Rotorgrößen zur Verfügung gestellt werden: 25mm, 50mm, 100mm, 150mm, 175mm und 285mm. Ein Ausblasventil 400 ist am höchsten Punkt der Mischkammer 300 angebracht, um Restmengen aus der LPD-Unit in einer, der LPD-Unit nachgeschalteten Füllmaschine zu drücken und Verluste zu minimieren.

An die Produktzirkulationsleitung 10 oder an die Mischkammer 300 ist in den gezeigten Ausführungsformen zusätzlich eine Flach- oder Ringdüse 600 gemäß
DE 20 2006 001 952 angeflanscht. Je nach Anforderungen kann auf diese zusätzliche Düse 600 jedoch auch verzichtet werden. Mithilfe der Flach- oder Ringdüse 600 kann eine besonders feine Dispersion erzielt werden, insbesondere besteht mit einer zusätzlichen Flach- oder Ringdüse 600 die Möglichkeit, separat Emulsionen beziehungsweise Dispersionen zu erzeugen. So kann in vorteilhafter Weise zusätzlich zu den Vorgängen in der Vormischkammer und dem Dispergierraum, in welchem der Rotor 41 mit dem Stator 42 wirkt, eine weitere Emulsion in der Emulsion erzeugt werden.

Zur gleichen Zeit, wenn das (nicht dargestellte) Ventil am Produkteinlass 8 geöffnet ist, wird auch das (nicht dargestellte) Ventil am Produktauslass 648 zumindest leicht geöffnet, damit das zufließende Produkt und das abfließende Produkt sich im wesentlichen die Waage halten und nur ein leichter Überdruck entsteht. Das Ventil am Produktauslass 648 kann dabei insbesondere derart ausgebildet sein, dass es nur im unteren Bereich öffnet (halbes Kugelventil), damit nur das Produkt, welches unter dem Rotor ausgestoßen wird, durch den Produktauslass 648 abgeführt wird.

An den Auslasskanal 50 schließt sich neben dem Produktauslass 648 und der Zirkulationsleitung 10 auch ein Stutzen für den Spülwasserauslass 500 an.

Es werden Auslasskanäle gemäß der oben dargestellten "dualen" Ausführungsform benutzt, wobei ein Auslasskanal zum Umpumpen in die Zirkulationsleitung 10 und ein weiterer Auslasskanal zum Abziehen des Produktes aus der Maschine zur (nicht dargstellten) der LPD-Unit nachgeschalteten Füllmaschine führt.

Die Dispergiermaschine pumpt cirka eine bis zu 10fach höhere Produktmenge intern um als die Menge, die zugeführt beziehungsweise abgeführt wird. Dadurch entsteht eine homogene Vermischung aller Zutaten, bevor das Produkt die LPD-Unit verlässt.

Der Propeller 3 ist so in die LPD-Unit eingebaut und positioniert, das zumindest ein Drittel des angesaugten Produktes radial über den Boden der Mischkammer 300 gedrückt wird. Dadurch wird das interne Vormischen in der Mischkammer optimiert mithilfe des schonenden Mischens durch Propeller.

In der Regel möchte man ein homogenes Produkt herstellen, mit so wenigen Durchläufen durch die LPD-Unit als nur möglich. Dies wird mit der beschriebenen Mischkammer 300 der LPD-Unit erreicht durch die optimierte Vorvermischung des Basisproduktes mit dem Umlaufproduktes in der Mischkammer 300.

Zum Beispiel kann aufbauend auf einem Basisprodukt in folgender Weise eine Gesichtscreme hergestellt werden.
In der LPD-Unit werden dem Basisprodukt cirka 1 Vol.-% Flüssigfarbstoff und 0,1 Vol.-% Duftstoffe zugeführt. Eine der LPD-Unit nachgeschaltete Füllmaschine mit einer Kapazität von 200 Tuben in der Minute, Tubengröße 60ml, benötigt cirka 12 kg Produkt / Minute. Für das entsprechend viskose Produkt wird ein Verhältnis des Umpumpens 1:5 eingestellt, das bedeutet, ein Volumenanteil wird entnommen, während 5 Volumenanteile umgepumpt werden.

Diese Herstellungsweise lässt sich beispielsweise realisieren mit einem Produkt des Anmelders mit der Bezeichnung " LPD-Unit LM 100" mit einem Rotordurchmesser von 100 mm. Das gesamte Volumen der LPD-Unit liegt unterhalb von 2 Litern, wobei (gemessen mit Wasser) ein Umpumpvolumen von cirka 8000 Litern / Stunde bei 23 m / sec erreicht wird.

In Figur 19 ist eine weitere Ausführungsform einer LPD-Unit gezeigt. Im Unterschied zu der in Figur 18 gezeigten Ausführungsform ist der Auslasskanal 5 von der Zirkulationsleitung 10 separiert. Die in Figur 18 auf der linken Seite dargestellte Vormischkammer 220 ist versetzt gezeichnet und liegt neben der in Figur 18 auf der rechten Seite dargestellten Vormischkammer 220 im Bereich der internen Produktzirkulation. Der Produktstrom teilt sich in eine interne Produktzirkulation und einen Produktausfluss in Richtung des ProduktAuslasses 648. Dies bedeutet, das das abgezogene Produkt nicht mit einer Vormischkammer 220 in Berührung kommt, wenn es die LPD-Unit verlässt.

### Beispiel 5: Silikondispersion

Zum Herstellen von einer industriellen Dispersion von 5 Gew.-% Silikon in 95 Gew.-% Wasser (Angaben inklusive Emulgatoren) mit kleinsten Tröpfchengrößen im Bereich von einigen Nanometern sind Rotor-Stator-Systeme geeignet. Rotor-Stator-Systeme zeigen einen sehr guten Tröpfchenaufbruch bei höheren Viskositäten. Daher wird 5% Silikon im Behälter vorgelegt, dann cirka 2 bis 3% Wasser mit einem geeigneten Emulgator eindispergiert, intensiv homogenisiert beziehungsweise dispergiert und dann mit dem Restwasser vermischt.

### Beispiel 6: Emulsion mit Phaseninversion O/W

Eine Emulsion mit 4 Gew.-% innerer Phase soll hergestellt werden. Die Öl- oder Wachs-Phase wird im Behälter vorgelegt. Dann wird mit zirka 4 % ein Teil der Wasserphase zugegeben und eindispergiert, so dass eine Wasser-in-Öl-Emulsion entsteht. Die Wasserphase kann kalt zugegeben werden, es entsteht eine Mischtemperatur, die oberhalb des Erstarrungspunktes der Öle beziehungsweise Wachse liegen kann. Nach erfolgter Dispergierung wird die Restwassermenge zugegeben und die Phaseninversion findet statt. Gegebenenfalls können auch noch weitere Rohstoffe zugegeben werden. Ein Kühlen des Ansatzes entfällt, da die Wasserphase kalt zugegeben wurde. Dies führt zu erheblichen Einsparungen an Energie und Ansatzzeit.

### Beispiel 7: Scale Up

Labor- und Produktions-Maschinen sollen weitgehend gleiche Geometrieverhältnisse und Arbeitsparameter aufweisen und darüberhinaus die Durchführung der betreffenden Verfahren zeitlich gesehen in gleicher Weise erlauben. Durch den mit Hilfe der Erfindung optimierten Produkt-Durchfluss durch die Rotor-Stator-Dispergiermaschine beziehungsweise die Anlage ist es möglich, kleinste Labor-Dispergiermaschinen herzustellen, die ein Ansatzvolumen zwischen 0,1 und 1,0 Litern haben, und vergleichbare Produkte zu erzeugen wie mit Produktionsmaschinen.

Das Verhältnis der Oberfläche zum Arbeitsvolumen einer Dispergiermaschine wird größer, je kleiner die Dispergiermaschine wird. Daraus resultieren größere Reibungsverluste beziehungsweise Druckverluste in den Dispergiermaschinen mit abnehmender Größe. Dieser negative Einfluss ist besonders groß bei der Verarbeitung von Produkten mit hoher Viskosität wie zum Beispiel den in den obigen Beispielen genannten Produkten. Aufgrund der Anhaftung des Produktes an den Oberflächen kommt es zu Strömungsabrissen. Mit folgenden geometrischen Durchmesserverhältnissen hat sich ein Scale Up gemäß der Erfindung als sehr gut möglich erwiesen: Für eine Labormaschine mit einem Fassungsvermögen von 1 Liter beträgt das Verhältnis des Durchmessers des Rotor-Stator-Systems zum Durchmesser des Behälters 120 mm / 24 mm = 5. Für eine Produktionsmaschine mit einem Fassungsvermögen von 500 Litern beträgt das Verhältnis des Durchmessers des Rotor-Stator-Systems zum Durchmesser des Behälters 930 mm / 150 mm = 6. Das Verhältnis 5/6 ist als ausreichend ähnlich zu betrachten.

### Beispiel 8: Herstellen von Emulsionen

Es wurden Öl-in-Wasser-Emulsionen aus Mineralöl und Wasser hergestellt. Als Emulgatoren wurden Tween 80 und Span 20 verwendet. Die gesamte Dauer der Herstellung betrug 15 Minuten.

Für die Vorlage der Fluide wurde ein Zweitanksystem verwendet. In einem Behälter mit einem Volumen von 30 Litern wurden 24 Liter einer wäßrigen Emulgatorlösung vorgelegt. In einem weiteren Vorlagetank wurden 6 Liter Öl bereitgestellt. Der Behälter ist über eine Leitung mit Transferpumpe mit dem Vorlagetank verbunden. An das Zweitankystem ist eine Rotor-Stator-Dispergiermaschine angeschlossen. Vorteilhafterweise kann eine Rotor-Stator-Dispergiermaschine mit einer Vormischkammer gemäß der deutschen Patentanmeldung DE 10 2008 022 355.7 des Anmelders für die Zugabe der Ölphase verwendet werden.

Der Dispergierraum mit dem Rotor hat einen Durchmesser von 100 mm. Bei einer Drehzahl des Rotors von 1000 Umdrehungen pro Minute beträgt die Umfangsgeschwindigkeit 5,2 m/s. Bei einer Drehzahl des Rotors von 5000 Umdrehungen pro Minute beträgt die Umfangsgeschwindigkeit 26 m/s. nach der Passage der Rotor-Stator-Dispergiermaschine wurde die Emulsion über eine Auuslasseinrichtung mit einem Auslasskanal in den Behälter zurückgeführt.

Für die in der unten angeführten Tabelle mit den Ziffern 1 bis 6 versehenen Tests wurde das Öl langsam mit 6 Litern pro Minute zugegeben.

Es wurden Versuche mit vollständig geöffnetem Ventil 9 (vergleiche Figur 14) durchgeführt, für diese ist in der unten stehenden Tabelle "offen" vermerkt. Ferner wurden auch Versuche durchgeführt, bei welchen das Ventil 9 zu 2/3 geschlossen war und so ein künstlicher Staudruck erzeugt wurde. Für diese Experimente ist in der unten stehenden Tabelle "Staudruck" vermerkt.

Unter der Rubrik "Test 1 (µm)" sind die Ergebnisse der mittleren Tropfengröße einer Emulsion nach einmaligem Durchlauf durch die Dispergiermaschine angegeben. Unter der Rubrik "Test 2 (µm)" sind die Ergebnisse der mittleren Tropfengröße einer Emulsion nach mehrmaliger Passage der Dispergiermaschine im Kreislauf nach einer Gesamtversuchsdauer von 15 Minuten angegeben.

Die Tropfengrößenverteilungen wurden mit einem Meßgerät des Herstellers Horiba nach dem Prinzip der Laserlichtbeugung bestimmt. Unter "average size" ist der Mittelwert aus den Ergebnissen des Test 1 und Test 2 angegeben

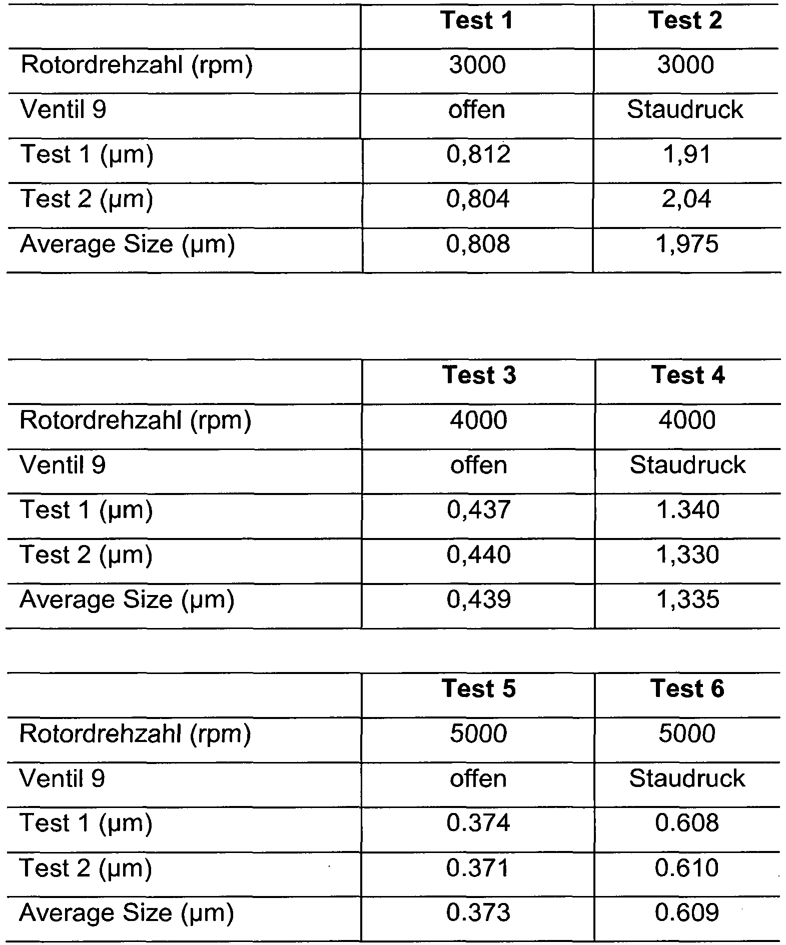

Eine weitere Versuchsserie mit Tests 7 bis 12 wurde mit einer schnellen Zugabe des Öls, nämlich mit 6 Litern in 20 Sekunden, durchgeführt. Die Ergebnisse sind in der unten stehenden Tabelle dargestellt.

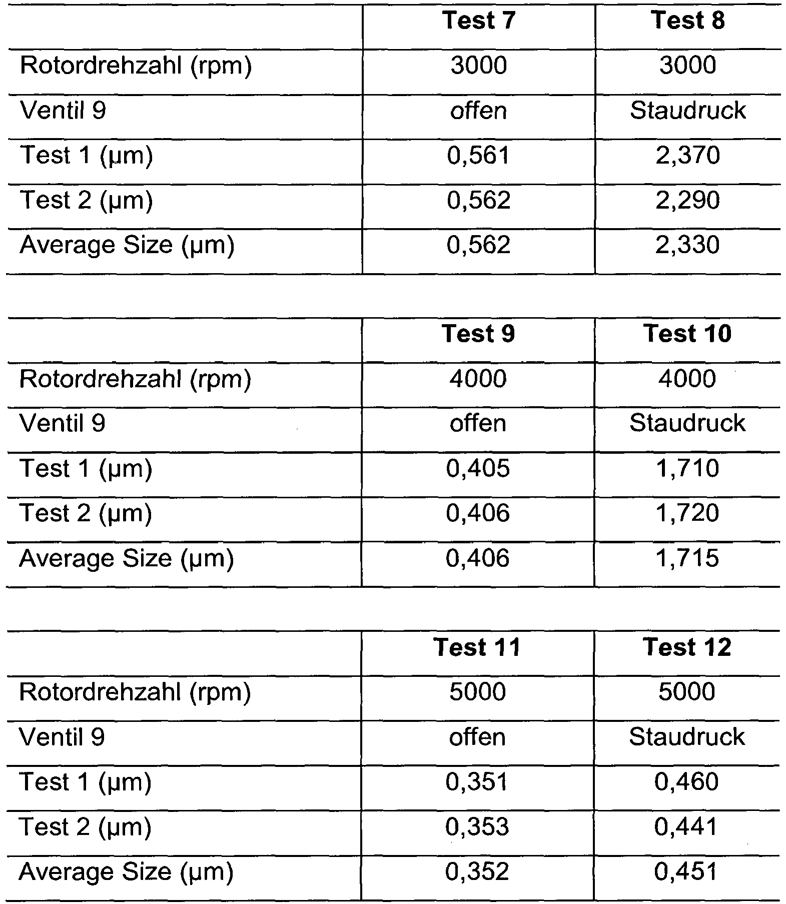

In einem weiteren Experiment bei vollständig geöffnetem Ventil 9 wurde im Behälter eine Rohemulsion (Pre-Mix) hergestellt durch Vormischung der Ölphase und der Wasserphase. Die Rohemulsion hatte eine Tropfengrößenverteilung mit einem mittleren Durchmesser von etwa 37 Mikrometern.

Nach einem Durchlauf durch das Rotor-Stator-System bei einer Drehzahl von 4000 Umdrehungen pro Minute betrug der mittlere Durchmesser noch 5,363 Mikrometer. Wird die Rohemulsion einmal bei 5000 Umdrehungen pro Minute durch das Rotor-Stator-System geführt, erreicht man einen mittleren Durchmesser von 2,504 Mikrometern. Wird das Produkt 15 Minuten lang im Kreislauf durch die Anlage bei einer Rotordrehzahl von 5000 Umdrehungen pro Minute gefahren, passiert es etwa 52 mal die Dispergiermaschine und man erreicht einen mittleren Tropfendruchmesser von 0,347 Mikrometern. Die obigen Zahlenangaben beziehen sich auf eine Messung. Wie bei den Tests 1 bis 12 auch wurden mehrere Messungen durchgeführt. Deren Ergebnisse sind in der folgenden Tabelle dargestellt.

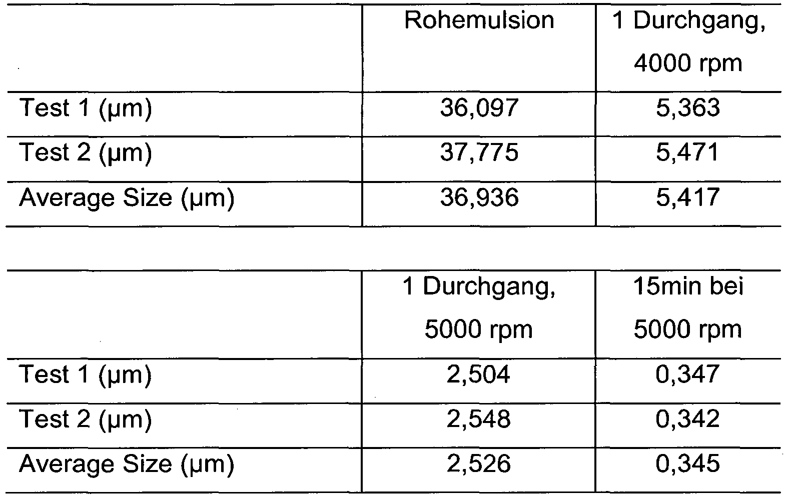

Die oben beschriebenen Versuche zur Emulsionsherstellung zeigen deutlich den Einfluss des Gegendrucks beziehungsweise Staudrucks, welcher durch die Ventilstellung des Ventils 9 aufgebracht werden kann, auf die Tröpfchengröße. Des Weiteren zeigen die Experimente, dass die Erfindung es ermöglicht, kleinste Tröpfen zu erreichen. Diese Tropfen sind kleiner als die kleinsten mittleren Tropfengrößen, die sich mit herkömmlichen Rotor-Stator-Systemen erzielen lassen. Darin zeigt sich die vorteilhafte Wirkung der Erfindung, die zu Ausbildung und Erhaltung einer turbulente Durchströmung der gesamten Anlage beiträgt.

### Bezugszeichenliste

- 1: Behälter (Vorlagebehälter)
- 13: Bereich der dem Auslass benachbarten Behälterwand
- 150: Längsachse des Behälters
- 180: Senkrechten auf die Längsachse des Behälters
- D₁: Durchmesser des Behälters
- 12: Auslass des Behälters
- 14: Behälterboden
- 15: Behälterwand
- 16: Behälterwandöffnung

- 2: Zwischenstück (Ansaugkopf)
- 21: erste Öffnung des Zwischenstücks
- 22: zweite Öffnung des Zwischenstücks
- 25: Rohrleitung des Zwischenstücks
- 250: Längsachse der Rohrleitung des Zwischenstücks
- α₃₀: Neigungswinkel der Längsachse der Rohrleitung des Zwischenstücks gegenüber der Längsachse des Behälters
- 23: Wand der Rohrleitung
- 260: Bereich der Rohrleitung des Zwischenstücks, in welchem die Wand nach außen gewölbt ist
- 210: erster Teil der Rohrleitung des Zwischenstücks
- 220: zweiter Teil der Rohrleitung des Zwischenstücks
- 230: dritter Teil der Rohrleitung des Zwischenstücks
- 26: Kammer zur Aufnahme eines Fördermittels
- 27: flexibles Element, Gummibalg
- 28: Strombrecher
- 280: Schraubverbindung

- 3: Fördermittel, insbesondere Rührerblatt
- 31: Rührer
- 32: Schaft des Rührers
- 33: Hülse
- 34: Druckseite des Fördermittels
- 35: Saugseite des Fördermittels

- 4: Rotor-Stator-Dispergiermaschine
- 40: Gehäuse
- 41: Rotor
- 42: Stator
- 431, 432: innerer beziehungsweise äußerer Zahnkranz des Stators
- 430, 433: Durchtrittsfläche zwischen den Zähnen des inneren beziehungsweise äußeren Zahnkranzes
- 44, 45, 46, 47: Durchtrittsflächen, durch welche Fluid aus der Rotor-Stator-Dispergiermaschine austritt
- 48: Abführvorrichtung, insbesondere Rohrleitung
- 49: Ringkanal

- 5: Auslasseinrichtung
- 50: Auslasskanal
- 51: erste Öffnung des Auslasskanals,
- 510: größte Breite der rechteckigen ersten Öffnung des Auslasskanals
- 52: zweite Öffnung des Auslasskanals,
- 53: Konus des Auslasskanals.
- Lₐᵤₛ: Länge des Auslasskanals
- 54, 55, 56, 57: Seitenflächen des Auslasskanäle
- 60, 61, 62, 63, 64, 65, 66: Zuführeinrichtung zum Zuführen von Zutaten in den Auslasskanal, Injektor
- 60.1, 60.2: Zufuhrkanal
- 650: Verbindungselement (Flansch) zum Anschluss der Zuführeinrichtung an die Auslasseinrichtung
- 648: Verbindungselement (Flansch) zum Anschluss der Zuführeinrichtung an die Abführeinrichtung

- 7, 8: Einlaufstutzen
- 71: Einlauföffnung
- 710: Querschnittsfläche der Einlauföffnung
- 72: Zulauföffnung
- 720: Querschnittsfläche der Zulauföffnung
- 75: Rohrleitung des Einlaufstutzens
- 751: Bereich der Rohrleitung, welcher in die Einlauföffnung mündet
- α₁₀₀: Neigungswinkel der Längsachse der Rohrleitung des Einlaufstutzens gegenüber der Senkrechten auf die Längsachse des Behälters
- 76: Längsachse des Einlaufstutzens

- 9: Ventil
- 10: Zirkulationsleitung
- 100: Entnahme
- 115: Welle
- 116: Motor
- 117: Dichtung, mechanische Dichtung
- 120: Anlage
- 105.1: flexibles Elemente, Abschnitt aus ausreichend biegsamen Material
- 200: LPD-Gehäuse
- 220: Vormischkammer
- 250: Zulauf, Einlauf in die Vormischkammer
- 300: kugelige Mischkammer
- 400: Ausblas-Ventil
- 500: Spülwasserauslaß
- 600: Flach- oder Ringdüse

## Patentansprüche

1. Auslasseinrichtung (5) für den Anschluss an eine Rotor-Stator-Dispergiermaschine (4), welche ein Rotor-Stator-System (41, 42) mit zumindest einem Zahnkranz (43) umfaßt, und an eine Abführvorrichtung (48), insbesondere eine Rohrleitung, zum Abführen von Fluid aus der Rotor-Stator-Dispergiermaschine (4),
wobei die Auslasseinrichtung (5) mindestens zwei Auslasskanäle (50)_mit
je einer ersten Öffnung (51) zum Anschluss an das Außengehäuse der Rotor-Stator-Dispergiermaschine in einem das Rotor-Stator-System umfangenden Bereich,
und mit je einer zweiten Öffnung (52) zum Anschluss an die eine Abführvorrichtung (48) aufweist, **dadurch gekennzeichnet, dass**
die erste Öffnung (51) einen rechteckigen Querschnitt aufweist und
die zweite Öffnung (52) eine kleinere Querschnittsfläche als die erste Öffnung aufweist, so dass über die Länge der Auslasseinrichtung (5) zwischen der ersten und der zweiten Öffnung im wesentlichen ein Konus (53) ausgebildet wird.

2. Auslasseinrichtung (5) nach Anspruch 1,
**dadurch gekennzeichnet, dass**
die Auslasseinrichtung vier Auslasskanäle (50) aufweist.

3. Auslasseinrichtung (5) nach Anspruch 1 oder 2,
**dadurch gekennzeichnet, dass**
die Länge Lₐᵤₛ des Auslasskanals (50) mindestens der größten Breite (510) der rechteckigen ersten Öffnung (51) entspricht.

4. Auslasseinrichtung (5) nach einem der Ansprüche 1 bis 3,
**dadurch gekennzeichnet, dass**
die zweite Öffnung (52) kreisförmig ist.

5. Auslasseinrichtung (5) nach einem der Ansprüche 1 bis 4,
**dadurch gekennzeichnet, dass**
die Summe der Querschnittsflächen der ersten Öffnung (51) aller Auslasskanäle (50) im wesentlichen der gesamten freien Fläche zwischen den Zähnen des Zahnkranzes (43) entspricht, welcher beim Anschluss der Auslasseinrichtung (5) an das Außengehäuse der Rotor-Stator-Dispergiermaschine (4) in dem das Rotor-Stator-System umfangenden Bereich der ersten Öffnung (51) benachbart ist.

6. Auslasseinrichtung (5) nach einem der Ansprüche 1 bis 5,
**dadurch gekennzeichnet, dass**
der Übergang von der Seitenfläche (54, 55) eines Auslasskanals in die Seitenfläche (56, 57) eines benachbarten Auslasskanals (50) bogenförmig verläuft.

7. Auslasseinrichtung (5) nach einem der Ansprüche 1 bis 6,
**dadurch gekennzeichnet, dass**
die erste Öffnung (51) eines jeden Auslasskanals derart dimensioniert ist, dass jeder Auslasskanal im wesentlichen direkt in den benachbarten Außenanal übergeht.

8. Auslasseinrichtung (5) nach einem der Ansprüche 1 bis 7,
**dadurch gekennzeichnet, dass**
zumindest ein Auslasskanal (50) eine Zuführeinrichtung (60) zum Zuführen von Zutaten in fester, pulverförmiger und/oder flüssiger Form zu dem Fluid, welches im Betrieb durch den Auslasskanal (50) aus der Rotor-Stator-Dispergiermaschine (4) fließt, umfaßt.

## Claims

1. Outlet apparatus (5) for the connection with a rotor-stator dispersion machine (4) comprising a rotor-stator system (41, 42) having at least one toothed ring (43) and with a discharge apparatus (48), in particular a tube line, for discharging fluid from the rotor-stator dispersion machine (4), and wherein the outlet apparatus (5) comprises at least two outlet channels (50), each of the outlet channels (50) with a first opening (51) for the connection with the outside housing of the rotor-stator dispersion machine in an area surrounding the rotor-stator system and with a second opening (52) for the connection with the one discharge apparatus (48), **characterized in that** the first opening (51) has a rectangular cross-section and the second opening (52) has a smaller cross-sectional area than the first opening so that the length of the outlet apparatus (5) is essentially tapered in the way of a cone (53) between the first and the second openings.

2. Outlet apparatus (5) as claimed in Claim 1, **characterized in that** the outlet apparatus comprises four outlet channels (50).

3. Outlet apparatus (5) as claimed in Claim 1 or 2, **characterized in that** the length Lₐᵤₛ of the outlet channel (50) corresponds at least to the largest width (510) of the rectangular first opening (51).

4. Outlet apparatus (5) as claimed in one of the Claims 1 to 3, **characterized in that** the second opening (52) is circular.

5. Outlet apparatus (5) as claimed in one of the Claims 1 to 4, **characterized in that** the sum of the cross-sectional areas of the first opening (51) of all outlet channels (50) essentially corresponds to the total free area between the teeth of the toothed ring (43), which is adjacent to the first opening (51) when the outlet apparatus (5) is in connection with the outside housing of the rotor-stator dispersion machine in the area surrounding the rotor-stator system.

6. Outlet apparatus (5) as claimed in one of the Claims 1 to 5, **characterized in that** the transition from the lateral area (54, 55) of an outlet channel to the lateral area (56, 57) of an adjacent outlet channel (50) describes the shape of an arch.

7. Outlet apparatus (5) as claimed in one of the Claims 1 to 6, **characterized in that** the first opening (51) of each outlet channel is dimensioned in such a way that, essentially, each outlet channel directly transitions into the respectively adjacent outside channel.

8. Outlet apparatus (5) as claimed in one of the Claims 1 to 7, **characterized in that** at least one outlet channel (50) comprises a feed apparatus (60) for adding ingredients in solid, powder and/or liquid form to the fluid that flows, during operation, through the outlet channel (50) out of the rotor-stator dispersion machine (4).

## Revendications

1. Dispositif de sortie (5) pour le raccordement à un disperseur à rotor-stator (4), lequel comprend un système de rotor-stator (41, 42) pourvu d'au moins une couronne dentée (43), et à un dispositif d'évacuation (48), en particulier une conduite, destinée à évacuer le fluide du disperseur à rotor-stator (4),
le dispositif de sortie (5) comprenant au moins deux canaux de sortie (50) présentant :
chacun une première ouverture (51) pour le raccordement au logement extérieur du disperseur à rotor-stator dans une zone entourant le système de rotor-stator,
et présentant chacun une deuxième ouverture (52) pour le raccordement au dispositif d'évacuation (48),
**caractérisé en ce que** :
la première ouverture (51) présente une section transversale rectangulaire, et
la deuxième ouverture (52) présente une superficie de section inférieure à celle de la première ouverture, de sorte que sensiblement un cône (53) est formé sur toute la longueur du dispositif de sortie (5) entre la première et la deuxième ouverture.

2. Dispositif de sortie (5) selon la revendication 1, le dispositif de sortie étant **caractérisé en ce qu'**il comprend quatre canaux de sortie (50).

3. Dispositif de sortie (5) selon la revendication 1 ou 2, **caractérisé en ce que** :
la longueur Lₐᵤₛ du canal de sortie (50) correspond au moins à la plus grande largeur (510) de la première ouverture (51) rectangulaire.

4. Dispositif de sortie (5) selon l'une quelconque des revendications 1 à 3, **caractérisé en ce que** :
la deuxième ouverture (52) est circulaire.

5. Dispositif de sortie (5) selon l'une quelconque des revendications 1 à 4, **caractérisé en ce que** :
la somme des superficies de section de la première ouverture (51) de tous les canaux de sortie (50) correspond sensiblement à la totalité de la surface libre entre les dents de la couronne dentée (43), laquelle, lors du raccordement du dispositif de sortie (5) au logement extérieur du disperseur à rotor-stator (4) dans la zone entourant le système de rotor-stator, est voisine de la première ouverture (51).

6. Dispositif de sortie (5) selon l'une quelconque des revendications 1 à 5, **caractérisé en ce que** :
le passage de la surface latérale (54, 55) d'un canal de sortie dans la surface latérale (56, 57) d'un canal de sortie (50) voisin s'étend de manière arquée.

7. Dispositif de sortie (5) selon l'une quelconque des revendications 1 à 6, **caractérisé en ce que** :
la première ouverture (51) de chaque canal de sortie est dimensionnée de telle manière que chaque canal de sortie passe sensiblement directement dans le canal extérieur voisin.

8. Dispositif de sortie (5) selon l'une quelconque des revendications 1 à 7, **caractérisé en ce que** :
au moins un canal de sortie (50) comprend un dispositif d'amenée (60) destiné à amener des ingrédients sous forme solide, poudreuse et/ou liquide au fluide, lequel, lors du fonctionnement, sort en s'écoulant du disperseur à rotor-stator (4) en passant par le canal de sortie (50).
